# EUROPEAN PATENT APPLICATION

(11) **EP 4 512 838 A1**
(43) Date of publication of application: **26.02.2025**
(21) Application number: 23791817.2
(22) Date of filing: 17.04.2023
(51) Int. Cl.: C08G 14/073, C08G 8/16, C08G 12/08, C08J 5/24, C08L 61/34

(54) **THERMOSETTING RESIN, PRODUCTION METHOD THEREFOR, AND USE THEREOF**

(30) Priority: 20.04.2022 JP 2022069585; 30.01.2023 JP 2023012015
(71) Applicant: Kaneka Corporation, Osaka-shi, Osaka 530-8288 (JP)
(72) Inventor: YOSHITAKE, Mari, Settsu-shi, Osaka 566-0072 (JP)
(74) Representative: Hoffmann Eitle
(86) International application number: PCT/JP2023/015294
(87) International publication number: WO 2023/204169

(57) **Abstract**

Realized is a thermosetting resin which is capable of being decomposed after the thermosetting resin is cured. A thermosetting resin in accordance with an embodiment of the present invention has, in a main chain, a benzoxazine ring structure which is represented by a specific formula that contains a trivalent aromatic group derived from a phenol compound (A), a divalent aromatic group derived from an aromatic diamine compound (B1), and a divalent aromatic group derived from an aromatic diamine compound (B2).

## Description

### Technical Field

The present invention relates to a thermosetting resin, a method for producing the thermosetting resin, and use of the thermosetting resin.

### Background Art

It is known that a benzoxazine compound cures in a case where a benzoxazine ring undergoes ring opening polymerization and a reaction by heat or the like. For example, Patent Literature 1 discloses a curable resin composition containing a benzoxazine compound. Patent Literature 1 also discloses a film, a prepreg, and the like each of which is obtained by use of the curable resin composition.

### Citation List

### [Patent Literature]

[Patent Literature 1]
Japanese Patent Application Publication Tokukai No. 2014-148562

### Summary of Invention

### Technical Problem

However, in general, since a benzoxazine compound irreversibly cures, a cured product of the benzoxazine compound cannot be easily decomposed. Therefore, a conventional benzoxazine compound as described above has room for improvement in terms of decomposability after curing. An object of an aspect of the present invention is to realize a thermosetting resin which is capable of being decomposed after the thermosetting resin is cured.

### Solution to Problem

In order to attain the above object, a thermosetting resin in accordance with an aspect of the present invention has, in a main chain, a benzoxazine ring structure represented by general formula (I): 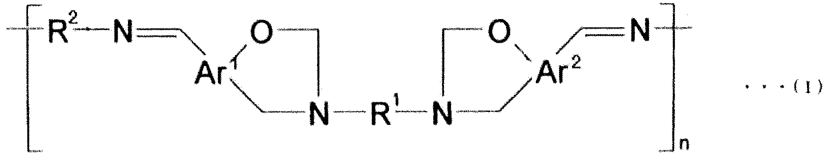 [wherein:
Ar¹ and Ar² each represent a trivalent aromatic group derived from a phenol compound (A);
Ar¹ and Ar² may be identical to or different from each other;
R¹ represents a divalent aromatic group which is derived from an aromatic diamine compound (B1) and which is represented by one or more of general formulas (II) to (V);
R² represents a divalent aromatic group derived from an aromatic diamine compound (B2);
R¹ and R² may be identical to or different from each other; and
n represents 1 or more]: 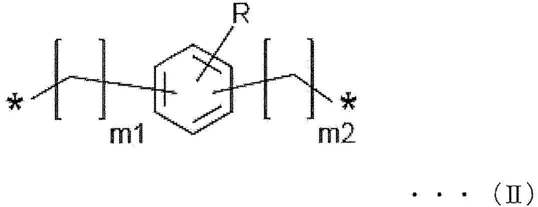 [wherein:
   asterisks each represent a bonding site;
   bonds to an aromatic ring which bonds form the main chain, except a bond between R and the aromatic ring, are in meta- or para- position;
   the R is a substituent on the aromatic ring and represents an aliphatic group having 1 to 10 carbon atoms, the number of Rs is 0 or 1 or more, and, in a case where the number of Rs is 2 or more, Rs may be identical to or different from each other; and
   m1 and m2 each represent 0 or 1]; 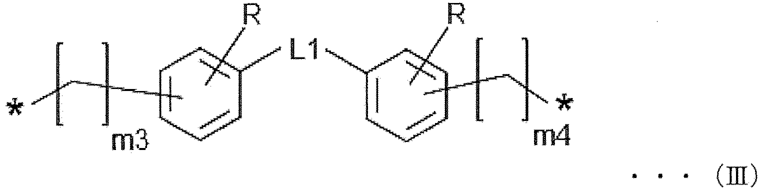 [wherein:
      asterisks each represent a bonding site;
      bonds to each of two aromatic rings which bonds form the main chain, except bonds between Rs and the two aromatic rings, are in meta- or para- position;
      L1 represents one or more of a single bond, an isopropylidene group, a sulfonyl group, a carbonyl group, and a 9,9-fluorenyl group;
      the Rs are substituents on the two aromatic rings and each represent an aliphatic group having 1 to 10 carbon atoms, the number of Rs on each of the two aromatic rings is 0 or 1 or more, and, in a case where the number of Rs is 2 or more, the Rs may be identical to or different from each other; and
      m3 and m4 each represent 0 or 1]; 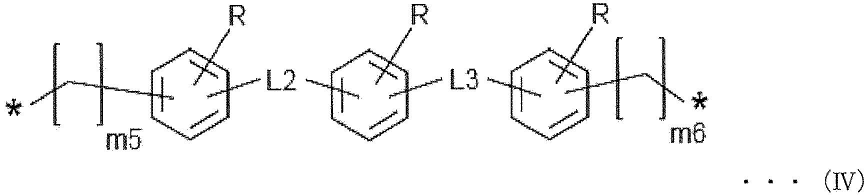 [wherein:
         asterisks each represent a bonding site;
         bonds to each of three aromatic rings which bonds form the main chain, except bonds between Rs and the three aromatic rings, are in meta- or para- position;
         L2 and L3 each represent an oxy group;
         the Rs are substituents on the three aromatic rings and each represent an aliphatic group having 1 to 10 carbon atoms, the number of Rs on each of the three aromatic rings is 0 or 1 or more, and, in a case where the number of Rs is 2 or more, the Rs may be identical to or different from each other; and
         m5 and m6 each represent 0 or 1]; and 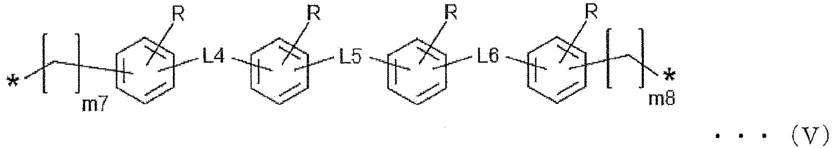 [wherein:
            asterisks each represent a bonding site;
            bonds to each of four aromatic rings which bonds form the main chain, except bonds between Rs and the four aromatic rings, are in meta- or para- position;
            L4 and L6 each represent an oxy group;
            L5 represents one or more of a single bond, an isopropylidene group, a sulfonyl group, a carbonyl group, and a 9,9-fluorenyl group;
            the Rs are substituents on the four aromatic rings and each represent an aliphatic group having 1 to 10 carbon atoms, the number of Rs on each of the four aromatic rings is 0 or 1 or more, and, in a case where the number of Rs is 2 or more, the Rs may be identical to or different from each other; and
            m7 and m8 each represent 0 or 1].

A method for producing a thermosetting resin in accordance with an aspect of the present invention is a method for producing a thermosetting resin which has a benzoxazine ring structure in a main chain, including:
a step (s1) of reacting a phenol compound (A), an aromatic diamine compound (B1), and an aldehyde compound (C); and
a step (s2) of further reacting an aromatic diamine compound (B2),
the method including the steps (s1) and (s2) in this order,
the phenol compound (A) having an aldehyde group, and
the aromatic diamine compound (B1) being represented by one or more of general formulas (IIa) to (Va): 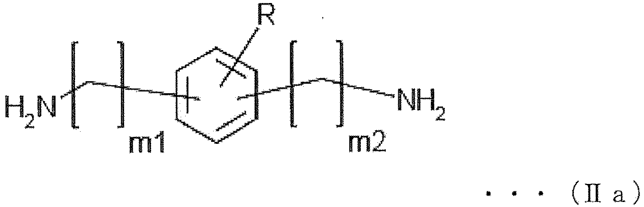 [wherein:
   bonds to an aromatic ring which bonds form the main chain, except a bond between R and the aromatic ring, are in meta- or para- position;
   the R is a substituent on the aromatic ring and represents an aliphatic group having 1 to 10 carbon atoms, the number of Rs is 0 or 1 or more, and, in a case where the number of Rs is 2 or more, Rs may be identical to or different from each other; and
   m1 and m2 each represent 0 or 1]; 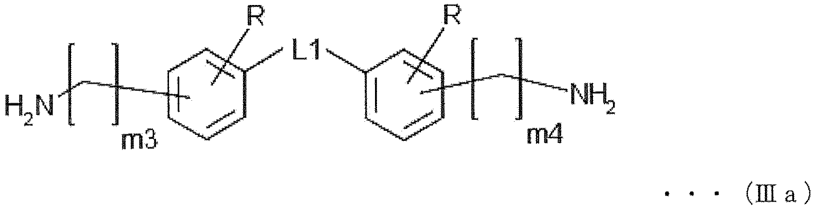 [wherein:
      bonds to each of two aromatic rings which bonds form the main chain, except bonds between Rs and the two aromatic rings, are in meta- or para- position;
      L1 represents one or more of a single bond, an isopropylidene group, a sulfonyl group, a carbonyl group, and a 9,9-fluorenyl group;
      the Rs are substituents on the two aromatic rings and each represent an aliphatic group having 1 to 10 carbon atoms, the number of Rs on each of the two aromatic rings is 0 or 1 or more, and, in a case where the number of Rs is 2 or more, the Rs may be identical to or different from each other; and
      m3 and m4 each represent 0 or 1]; 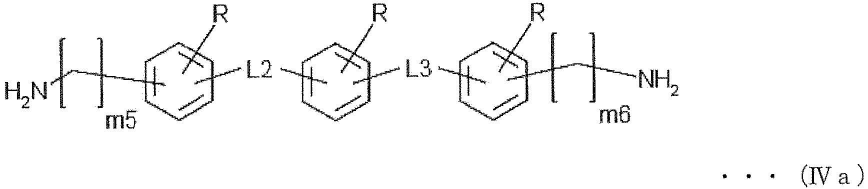 [wherein:
         bonds to each of three aromatic rings which bonds form the main chain, except bonds between Rs and the three aromatic rings, are in meta- or para- position;
         L2 and L3 each represent an oxy group;
         the Rs are substituents on the three aromatic rings and each represent an aliphatic group having 1 to 10 carbon atoms, the number of Rs on each of the three aromatic rings is 0 or 1 or more, and, in a case where the number of Rs is 2 or more, the Rs may be identical to or different from each other; and
         m5 and m6 each represent 0 or 1]; and 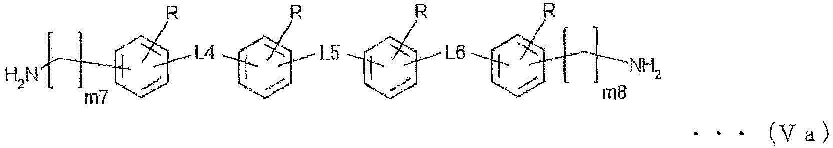 [wherein:
            bonds to each of four aromatic rings which bonds form the main chain, except bonds between Rs and the four aromatic rings, are in meta- or para- position;
            L4 and L6 each represent an oxy group;
            L5 represents one or more of a single bond, an isopropylidene group, a sulfonyl group, a carbonyl group, and a 9,9-fluorenyl group;
            the Rs are substituents on the four aromatic rings and each represent an aliphatic group having 1 to 10 carbon atoms, the number of Rs on each of the four aromatic rings is 0 or 1 or more, and, in a case where the number of Rs is 2 or more, the Rs may be identical to or different from each other; and
            m7 and m8 each represent 0 or 1].

Furthermore, in order to attain the above object, a thermosetting resin in accordance with an aspect of the present invention is a thermosetting resin which has a benzoxazine ring structure in a main chain, wherein
an uncured molded product which is obtained by molding the thermosetting resin has remoldability and toughness,
the remoldability refers to a property in which, after the uncured molded product is divided into a plurality of pieces, the plurality of pieces are capable of being integrated by heating at not higher than 200°C,
the toughness refers to a property in which a break or a crack does not occur in the uncured molded product before and after the heating, and
the remoldability and the toughness are maintained even in a case where division and integration and the heating are repeated once or more.

### Advantageous Effects of Invention

An aspect of the present invention makes it possible to provide a thermosetting resin which is capable of being decomposed after the thermosetting resin is cured.

### Brief Description of Drawings

Fig. 1 is a GPC chart of an imino group-containing benzoxazine compound (b) in Production Example 1.
Fig. 2 is a GPC chart of an imino group-containing benzoxazine compound (d) in Production Example 2.
Fig. 3 is a GPC chart of an imino group-containing benzoxazine compound (f) in Production Example 3.
Fig. 4 is a GPC chart of an imino group-containing benzoxazine compound (h) in Production Example 4.
Fig. 5 is a GPC chart of an imino group-containing benzoxazine compound (j) in Production Example 5.
Fig. 6 shows a result of a decomposability evaluation test in each of Examples and Comparative Examples.
Fig. 7 shows a result of an amine decomposability evaluation test (decomposability evaluation 2) in each of Examples and Comparative Examples.
Fig. 8 is a GPC chart of a decomposition solution after the amine decomposability evaluation test.
Fig. 9 shows a result of evaluating the remoldability of an uncured film in Example 12.
Fig. 10 illustrates a method for preparing a carbon fiber reinforced plastic (CFRP).
Fig. 11 shows a result of observing, with use of a digital camera for a microscope, whether a void was present in a plate-like CFRP obtained in Example 14.
Fig. 12 shows a result of an amine decomposability evaluation of the CFRP in each of Examples and Comparative Examples.
Fig. 13 shows a result of recovering recycled carbon fibers (r-CF) in Example 22.
Fig. 14 shows a result of observing the recycled carbon fibers (r-CF) with use of an SEM in Example 23.
Fig. 15 shows a procedure of a repetitive deformability test of a prepreg laminate in Examples and Comparative Examples.
Fig. 16 shows a procedure of a free-standing property test of a prepreg laminate in Examples and Comparative Examples.

### Description of Embodiments

The following description will discuss an embodiment of the present invention. Unless otherwise specified herein, a numerical range expressed as "A to B" means "not less than A (inclusive of A and greater than A) and not more than B (inclusive of B and smaller than B)".

### [1. Thermosetting resin]

A thermosetting resin in accordance with an embodiment of the present invention has, in a main chain, a benzoxazine ring structure represented by general formula (I).

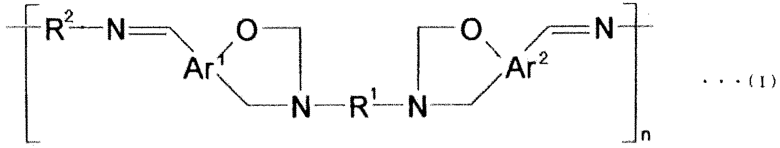

In formula (I), Ar¹ and Ar² each represent a trivalent aromatic group derived from a phenol compound (A). In the present specification, an aromatic group is intended to mean an organic group having at least one aromatic ring. Ar¹ and Ar² may be identical to or different from each other. One type or two or more types of phenol compounds (A) may be used.

R¹ represents a divalent aromatic group which is derived from an aromatic diamine compound (B1) and which is represented by one or more of general formulas (II) to (V) below. R² represents a divalent aromatic group derived from an aromatic diamine compound (B2). R¹ and R² may be identical to or different from each other. One type or two or more types of aromatic diamine compounds (B1) may be used. Similarly, one type or two or more types of aromatic diamine compounds (B2) may be used.

"n" indicates a polymerization degree, and represents 1 or more. From the viewpoint of improvement in mechanical properties, "n" is preferably 1.5 or more, more preferably 2 or more, and even more preferably 3 or more. From the viewpoint of maintenance of fluidity during molding, "n" is preferably 50 or less, more preferably 40 or less, and even more preferably 30 or less.

The thermosetting resin has an imino group (C=N, also referred to as an imine bond) as shown in general formula (I). The imino group is a dynamic covalent bond, that is, a covalent bond which is capable of being decomposed (cleaved). Therefore, it is possible to cleave the imino group under an acidic or basic condition after the thermosetting resin is cured. A method for cleaving the imino group under the acidic condition is solvolysis. Examples of a method for cleaving the imino group under the basic condition include a method in which a basic substance is added to the imino group so that the imino group undergoes a cleavage reaction or a bond exchange reaction. That is, after the thermosetting resin is cured, it is possible to chemically decompose the thermosetting resin and produce low molecular weight compounds. Therefore, it is also possible to recycle, by chemical recycle or the like, a cured product of the thermosetting resin. In contrast, a conventional benzoxazine compound which does not have an imino group (for example, P-d type) does not exhibit decomposability as described in Comparative Examples below.

From the viewpoint of improvement in the mechanical properties, the thermosetting resin has a number average molecular weight (Mn) of preferably not less than 1,000, more preferably not less than 1,500, and even more preferably not less than 2,000. From the viewpoint of processability, the thermosetting resin has a weight average molecular weight (Mw) of preferably not more than 100,000, more preferably not more than 50,000, and even more preferably not more than 20,000. The number average molecular weight and the weightaverage molecular weight can be measured by a gel permeation chromatograph (GPC), as described in Examples below.

The phenol compound (A) is preferably a phenol compound having an aldehyde group. Examples of the phenol compound having an aldehyde group include 4-hydroxybenzaldehyde, 2-hydroxybenzaldehyde, and vanillin. In particular, from the viewpoint of ease of synthesis of the thermosetting resin, 4-hydroxybenzaldehyde and/or vanillin are preferable, and 4-hydroxybenzaldehyde is more preferable.

R¹ is represented by one or more of general formulas (II) to (V) below each derived from the aromatic diamine compound (B1).

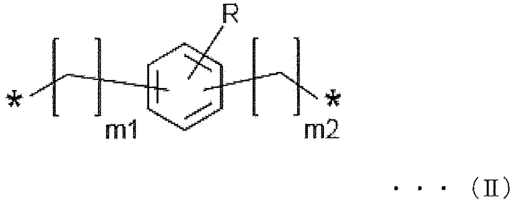

In general formula (II), asterisks each represent a bonding site. Bonds to an aromatic ring which bonds form the main chain, except a bond between R and the aromatic ring, are in meta- or para- position. The R is a substituent on the aromatic ring and represents an aliphatic group having 1 to 10 carbon atoms. The number of Rs is 0 or 1 or more. In a case where the number of Rs is 2 or more, Rs may be identical to or different from each other. m1 and m2 each represent 0 or 1.

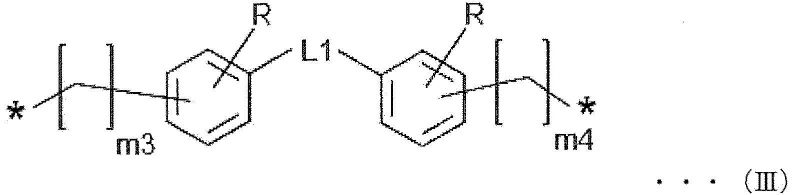

In general formula (III), asterisks each represent a bonding site. Bonds to each of two aromatic rings which bonds form the main chain, except bonds between Rs and the two aromatic rings, are in meta- or para- position. L1 represents one or more of a single bond, an isopropylidene group, a sulfonyl group, a carbonyl group, and a 9,9-fluorenyl group. The Rs are substituents on the two aromatic rings and each represent an aliphatic group having 1 to 10 carbon atoms. The number of Rs on each of the two aromatic rings is 0 or 1 or more. In a case where the number of Rs is 2 or more, the Rs may be identical to or different from each other. m3 and m4 each represent 0 or 1.

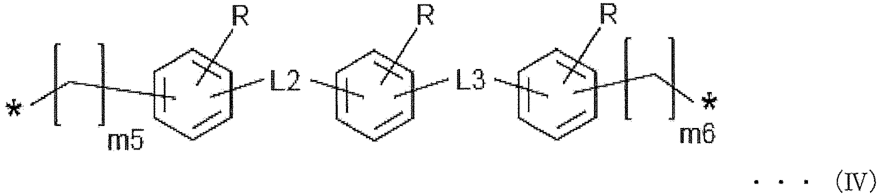

In general formula (IV), asterisks each represent a bonding site. Bonds to each of three aromatic rings which bonds form the main chain, except bonds between Rs and the three aromatic rings, are in meta- or para- position. L2 and L3 each represent an oxy group. The Rs are substituents on the three aromatic rings and each represent an aliphatic group having 1 to 10 carbon atoms. The number of Rs on each of the three aromatic rings is 0 or 1 or more. In a case where the number of Rs is 2 or more, the Rs may be identical to or different from each other. m5 and m6 each represent 0 or 1.

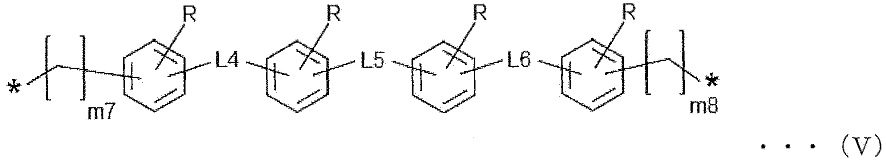

In general formula (V), asterisks each represent a bonding site. Bonds to each of four aromatic rings which bonds form the main chain, except bonds between Rs and the four aromatic rings, are in meta- or para- position. L4 and L6 each represent an oxy group. L5 represents one or more of a single bond, an isopropylidene group, a sulfonyl group, a carbonyl group, and a 9,9-fluorenyl group. The Rs are substituents on the four aromatic rings and each represent an aliphatic group having 1 to 10 carbon atoms. The number of Rs on each of the four aromatic rings is 0 or 1 or more. In a case where the number of Rs is 2 or more, the Rs may be identical to or different from each other. m7 and m8 each represent 0 or 1.

In other words, the aromatic diamine compound (B1) is represented by any of general formulas (IIa) to (Va) below. In general formulas (IIa) to (Va), definitions of L1 to L6, R, and m1 to m8 are the same as those in general formulas (II) to (V).

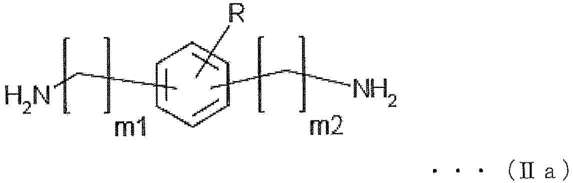

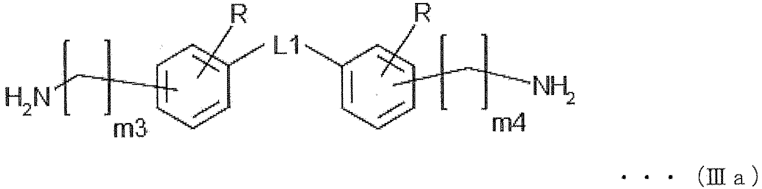

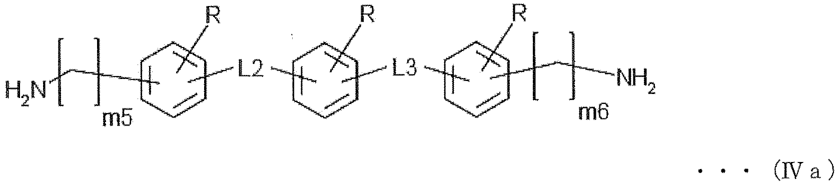

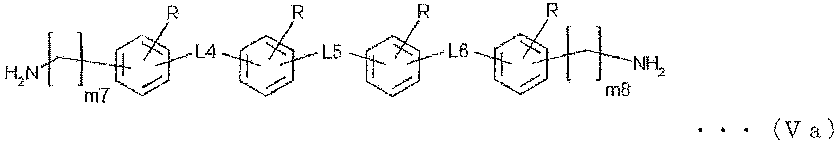

From the viewpoint of availability and ease of synthesis of the thermosetting resin, the aromatic diamine compound (B1) is preferably at least one selected from the group consisting of 1,4-diaminobenzene, 1,3-diaminobenzene, 2,4-diaminotoluene, 2,6-diaminotoluene, 3-(aminomethyl)benzylamine, 4-(aminomethyl)benzylamine, 3,3'-sulfonyldianiline, 4,4'-sulfonyldianiline, 3,3'-diaminobenzophenone, 4,4'-diaminobenzophenone, 1,3-bis(4-aminophenoxy)benzene, 1,3-bis(3-aminophenoxy)benzene, 2,2-bis[4-(4-aminophenoxy)phenyl]propane, bis[4-(4-aminophenoxy)phenyl]sulfone, 4,4'-bis(3-aminophenoxy) biphenyl, 4,4'-bis(4-aminophenoxy)biphenyl, and 9,9-bis(4-aminophenyl)fluorene. 3-(aminomethyl)benzylamine is also referred to as m-xylene-α,α'-diamine.

The aromatic diamine compound (B2) may be identical to or different from the aromatic diamine compound (B1). The aromatic diamine compound (B2) may be an aromatic diamine compound represented by any of general formulas (IIa) to (Va) described above, or may be another aromatic diamine compound. Examples of the another aromatic diamine compound include 1,4-bis(4-aminophenoxy)benzene, 2,2-bis[4-(4-aminophenoxy)phenyl]hexafluoropropane, and 2,2'-dimethylbiphenyl-4,4'-diamine.

The thermosetting resin may or may not contain a structure other than the benzoxazine ring structure represented by formula (I). For example, the thermosetting resin may have a structure derived from a monocyclic phenol compound for capping a terminal(s) of the structure represented by general formula (I). The thermosetting resin may contain a structure derived from aliphatic monoamine and/or a structure derived from a (poly)oxyalkylenemonoamine compound.

A curable resin in accordance with an embodiment of the present invention is a thermosetting resin which has a benzoxazine ring structure in a main chain, wherein an uncured molded product which is obtained by molding the thermosetting resin has remoldability and toughness, the remoldability refers to a property in which, after the uncured molded product is divided into a plurality of pieces, the plurality of pieces are capable of being integrated by heating at not higher than 200°C, the toughness refers to a property in which a break or a crack does not occur in the uncured molded product before and after the heating, and the remoldability and the toughness are maintained even in a case where division and integration and the heating are repeated once or more. Note, here, that the remoldability means a property in which the uncured molded product is capable of being remolded because the uncured molded product has thermoplasticity. Note also that the property in which the remoldability and the toughness are maintained even in a case where the division and the integration and the heating are repeated once or more can also be expressed as repetitive thermoplasticity.

The upper limit of a temperature of the heating at which temperature the plurality of pieces into which the uncured molded product has been divided are capable of being integrated is not higher than 200°C, preferably not higher than 180°C, more preferably not higher than 170°C, even more preferably not higher than 160°C, and most preferably not higher than 150°C. In a case where the temperature is not lower than 220°C, curing may excessively progress in the process of remolding, and it may be impossible to integrate the plurality of pieces. In a case where the temperature is not higher than 100°C, the remolding may be insufficient, and it may be impossible to integrate the plurality of pieces. That is, the lower limit of the temperature of the heating is preferably higher than 100°C.

A time for which the temperature is kept is, for example, preferably not shorter than 1 minute and not longer than 5 hours, even more preferably not shorter than 5 minutes and not longer than 3 hours, and most preferably not shorter than 10 minutes and not longer than 2 hours.

### [2. Method for producing thermosetting resin]

A method for producing a thermosetting resin in accordance with an embodiment of the present invention is a method for producing a thermosetting resin which has a benzoxazine ring structure in a main chain, including: a step (s1) of reacting a phenol compound (A), an aromatic diamine compound (B1), and an aldehyde compound (C); and a step (s2) of further reacting an aromatic diamine compound (B2), the method including the steps (s1) and (s2) in this order. The phenol compound (A) has an aldehyde group. The aromatic diamine compound (B1) is represented by one or more of general formulas (IIa) to (Va).

By this production method, it is possible to produce the foregoing thermosetting resin. By the step (s1), it is possible to form a benzoxazine ring. In the step (s2), it is possible to form an imino group by a reaction of the aldehyde group derived from the phenol compound (A) and an amino group derived from the aromatic diamine compound (B2).

The foregoing compounds can be used as the phenol compound (A), the aromatic diamine compound (B1), and the aromatic diamine compound (B2). The aldehyde compound (C) is not limited in particular, but is preferably formaldehyde. The formaldehyde can be paraformaldehyde, which is a polymer, formalin, which is in the form of an aqueous solution, or the like.

The molar ratio between the phenol compound (A) and the aromatic diamine compound (B1) in the step (s1) is preferably approximately 2:1, but may be 2.5/ 1 to 1.95/1. The molar ratio between the phenol compound (A) and the aldehyde compound (C) in the step (s1) is preferably 1/1 to 1/20, and more preferably 1/2 to 1/6. In a case where the molar ratio between the bifunctional phenol compound (A) and the aldehyde compound (C) falls within the above range, it is possible to suitably produce the benzoxazine ring. In the step (s2), the molar ratio between a benzoxazine compound obtained in the step (s1) and the aromatic diamine compound (B2) is preferably approximately 1:1, but may be 1/0.5 to 1/1.05.

The reactions in the steps (s1) and (s2) may be each carried out in a solvent. Examples of the solvent include: halogen-based solvents such as chloroform; non-halogen-based aromatic hydrocarbon solvents such as toluene and xylene; ether-based solvents such as tetrahydrofuran (THF); cyclic diether-based solvents such as 1,4-dioxane and 1,3-dioxolane; high polarity and high boiling point solvents such as N,N-dimethylformamide, N,N-dimethylacetamide, N-methyl-2-pyrrolidone, N,N-diethylacetamide, N-methylcaprolactam, γ-butyrolactone, and dimethyl sulfoxide; and mixed solvents of non-halogen-based hydrocarbon solvents and aliphatic alcohol-based solvents. Examples of the aliphatic alcohol-based solvents include methanol, ethanol, propanol, and butanol (including structural isomers). From the viewpoint of suppression of a side reaction, it is preferable to use a non-halogen-based aromatic hydrocarbon solvent in the step (s1) and use a halogen-based solvent or a cyclic diether-based solvent in the step (s2).

A reaction temperature in the step (s1) and/or the step (s2) is preferably 25°C to 150°C, and more preferably 40°C to 120°C. A reaction time in the step (s1) and/or the step (s2) is preferably 0.5 hours to 12 hours, and more preferably 1 hour to 10 hours.

In order to obtain a reaction intermediate as a precipitate in the step (s1), a reaction solution may be added to a non-halogen-based aliphatic hydrocarbon solvent such as hexane. In the step (s1) and/or the step (s2), an aliphatic alcohol-based solvent may be used to wash a product.

### [3. Composition]

The embodiments of the present invention also include a composition containing the foregoing thermosetting resin. The composition contains the thermosetting resin as a main component, and may contain another thermosetting resin, a thermoplastic resin, and a compounding agent as accessory components.

Examples of the another thermosetting resin include epoxy-based resins, thermosetting type modified polyphenylene ether resins, thermosetting polyimide resins, silicon resins, melamine resins, uria resins, allyl resins, phenol resins, unsaturated polyester resins, bismaleimidebased resins, alkyd resins, furan resins, polyurethane resins, and aniline resins.

Examples of the thermoplastic resin include thermoplastic epoxy resins and thermoplastic polyimide resins.

Examples of the compounding agent include, as necessary, flame retardants, nucleating agents, antioxidants, anti-aging agents, thermal stabilizers, photo stabilizers, ultraviolet absorbers, lubricants, auxiliary flame retardants, antistatic agents, anti-fogging agents, fillers, softeners, plasticizers, and coloring agents. Each of these agents may be used alone or two or more of these agents may be used in combination. A reactive or non-reactive solvent can also be used.

### [4. Uncured molded product and cured molded product]

The embodiments of the present invention also include an uncured molded product obtained by molding the foregoing thermosetting resin or the foregoing composition. The embodiments of the present invention also include a cured molded product obtained by curing the foregoing thermosetting resin, the foregoing composition, or the uncured molded product.

In the present specification, the uncured molded product is intended to be a molded product having a degree of cure of less than 1%, and the cured molded product is intended to be a molded product having a degree of cure of 1% to 100%. That is, the cured molded product also includes a molded product which is cured only partially. The degree of cure can be calculated from a ratio between the area of an exothermic peak obtained from a DSC curve of an uncured resin and the area of an exothermic peak obtained from a DSC curve of the uncured molded product or the cured molded product, as described in Examples below.

The dimensions and the shape of each of the uncured molded product and the cured molded product are not limited in particular. For example, each of the uncured molded product and the cured molded product has a film shape, a sheet shape, a plate shape, a block shape, or the like. The uncured molded product and the cured molded product may include another layer (for example, an adhesive layer), in addition to a layer made of the foregoing thermosetting resin or the foregoing composition.

The glass transition temperature (Tg) of the uncured molded product is preferably not higher than 300°C, more preferably not higher than 250°C, and even more preferably not higher than 200°C, from the viewpoint of mechanical properties. From the viewpoint of heat resistance, the glass transition temperature of the uncured molded product is preferably not lower than 30°C, more preferably not lower than 40°C, and even more preferably not lower than 50°C.

From the viewpoint of heat resistance, the glass transition temperature of the cured molded product is preferably not lower than 150°C, more preferably not lower than 200°C, and even more preferably not lower than 220°C. The upper limit of the glass transition temperature of the cured molded product is not limited in particular, but can be, for example, not higher than 400°C.

The thermal stability of each of the uncured molded product and the cured molded product can be evaluated by a 5% weight reduction temperature (Td5). The 5% weight reduction temperature of the uncured molded product is preferably not lower than 100°C, more preferably not lower than 150°C, and even more preferably not lower than 200°C. The 5% weight reduction temperature of the cured molded product is preferably not lower than 250°C, more preferably not lower than 300°C, and even more preferably not lower than 320°C.

From the viewpoint of the mechanical properties, the tensile modulus of each of the uncured molded product and the cured molded product is preferably not more than 10 GPa, more preferably not more than 8 GPa, and even more preferably not more than 5 GPa. From the viewpoint of ease of handling, the tensile modulus of each of the uncured molded product and the cured molded product is preferably not less than 0.1 GPa, more preferably not less than 0.5 GPa, and even more preferably not less than 1 GPa.

From the viewpoint of unlikeness of break, the tensile breaking strength of each of the uncured molded product and the cured molded product is preferably not less than 5 MPa, more preferably not less than 10 MPa, and even more preferably not less than 50 MPa.

From the viewpoint of the mechanical properties, the tensile elongation at break of each of the uncured molded product and the cured molded product is preferably not less than 1%, more preferably not less than 3%, and even more preferably not less than 5%.

A method for molding the uncured molded product and the cured molded product is not limited in particular, and examples thereof include: a method in which a solution obtained by dissolving the foregoing thermosetting resin or the foregoing composition in a solvent is casted on a base material and molded (casting method); and a method in which the foregoing thermosetting resin or the foregoing composition is pressed and molded (pressing method). Examples of the solvent used in the casting method include N,N-dimethylformamide (DMF), tetrahydrofuran (THF), chloroform, N,N-dimethylacetamide, N-methyl-2-pyrrolidone, N,N-diethylacetamide, N-methylcaprolactam, γ-butyrolactone, cyclohexanone, dimethyl sulfoxide, cyclopentanone, 1,4-dioxane, and 1,3-dioxolane. A pressure in the pressing method is not limited in particular, and may be, for example, 0.1 MPa to 5.0 MPa.

A molding temperature of the uncured molded product (the maximum temperature in a case where the molding temperature is increased gradually) is not limited in particular, but is preferably not lower than room temperature and lower than 200°C, more preferably 40°C to 180°C, and even more preferably 60°C to 160°C. A curing temperature of the cured molded product (the maximum temperature in a case where the curing temperature is increased gradually) is not limited in particular, but is preferably 200°C to 300°C, more preferably 210°C to 280°C, and even more preferably 220°C to 260°C.

The uncured molded product can be used as a precursor to the cured molded product, and can also be used, for example, as an adhesive sheet having curability. The cured molded product can be suitably used for electronic components, electronic apparatuses, and materials of the electronic components and the electronic apparatuses. The cured molded product can also be suitably used for multilayer substrates, laminated sheets, sealants, adhesive agents, and the like which are required to have particularly excellent dielectric characteristics. Furthermore, the cured molded product can also be used for aircraft members, automobile members, construction members, and the like.

The cured molded product may contain reinforcement fibers, from the viewpoint of improvement in mechanical strength of the cured molded product. Examples of the reinforcement fibers include inorganic fibers, organic fibers, metal fibers, and hybrid reinforcement fibers which are obtained by combining any of these fibers. One type or two or more types of reinforcement fibers may be used.

Example of the inorganic fibers include carbon fibers, graphite fibers, silicon carbide fibers, alumina fibers, tungsten carbide fibers, boron fibers, and glass fibers. Example of the organic fibers include aramid fibers, highdensity polyethylene fibers, the other general nylon fibers, and polyester fibers. Examples of the metal fibers include fibers of stainless steel, iron, and the like. Examples of the metal fibers also include carbon-coated metal fibers in which metal fibers are coated with carbon. In particular, the reinforcement fibers are preferably carbon fibers, from the viewpoint of an increase in strength of the cured molded product.

In general, the carbon fibers are subjected to sizing. The carbon fibers may be used as they are. As necessary, the fibers for which a small amount of a sizing agent is used can be used, or the sizing agent can be removed by an existing method such as an organic solvent treatment or a heat treatment. The carbon fibers may be subjected to a process in which a carbon fiber bundle is opened in advance with use of air, a roller, or the like so that the resin is easily impregnated between individual carbon fibers.

The embodiments of the present invention also include a prepreg or a semipreg each of which is obtained by impregnating reinforcement fibers with the foregoing thermosetting resin or the foregoing composition. In the present specification, the semipreg means a composite obtained by partially impregnating the reinforcement fibers with the thermosetting resin or the composition (semiimpregnated state) so that the reinforcement fibers and the thermosetting resin or the composition are integrated. The prepreg can be obtained from the semipreg. For example, the prepreg can be obtained by further heating and melting the semipreg and thereby impregnating the reinforcement fibers with the resin. That is, in the present specification, the prepreg can be said to be one in which a degree of impregnation of the reinforcement fibers with the resin is higher than in the semipreg.

The semipreg or the prepreg may be obtained, for example, by (i) stacking the cured molded product on the top and back of a sheet in which the reinforcement fibers are impregnated with the resin in advance (reinforcement fiber plain weave material) and (ii) pressing the cured molded product and the sheet at a given temperature and a given pressure.

The cured molded product can be used as a carbon fiber composite material. The carbon fiber composite material is also referred to as "carbon fiber reinforced plastic (CFRP)". A method for preparing the carbon fiber composite material is not limited in particular, and may be, for example, a method in which a semipreg or a prepreg each of which is a sheet obtained by impregnating carbon fibers with the resin is used or a method in which the carbon fibers (in bundled form or fabric form) are impregnated with the resin in liquid form. The foregoing cured molded product may be molded into the semipreg or the prepreg, and the semipreg or the prepreg may be used to prepare the carbon fiber composite material.

Note that the carbon fiber composite material is described here as an example, but, as stated above, reinforcement fibers which can be used are not limited to the carbon fibers. That is, the embodiments of the present invention also include a fiber composite material which is obtained by impregnating the reinforcement fibers with the foregoing thermosetting resin or the foregoing composition and curing the thermosetting resin or the composition (also referred to as "reinforcement fiber composite material").

Although the fiber composite material which is obtained with use of only the semipreg or the prepreg in accordance with the present invention is described here as an example, the semipreg or the prepreg in accordance with the present invention and a prepreg or a semipreg obtained by impregnating reinforcement fibers with another resin or a composition of the another resin may be stacked together to obtain the fiber composite material. The another resin is not limited in particular, and examples thereof include the another thermosetting resin and the thermoplastic resin described in [3. Composition]. The composition of the another resin contains the another resin as a main component, and may further contain, for example, the another thermosetting resin (except the another resin), the thermoplastic resin (except the another resin), and the compounding agent described in [3. Composition]. That is, the embodiments of the present invention also include a fiber composite material obtained by integrating (i) the fiber composite material which is obtained by impregnating the reinforcement fibers with the foregoing thermosetting resin or the foregoing composition and curing the thermosetting resin or the composition and (ii) a fiber composite material obtained by impregnating the reinforcement fibers with the another resin or the composition of the another resin, to such a degree that these fiber composite materials cannot be separated.

The semipreg or the prepreg preferably has a property in which the semipreg or the prepreg is capable of being repeatedly deformed (also referred to as repetitive deformability). In the present specification, the repetitive deformability indicates, for example, a property in which the semipreg or the prepreg is capable of being deformed into another shape. The repetitive deformability also includes a property in which the semipreg or the prepreg is capable of being deformed into another shape and cured by heating. The repetitive deformability also includes a property in which a semipreg laminate or a prepreg laminate each of which is obtained by stacking semipregs or prepregs once is capable of being deformed into another shape. The repetitive deformability also includes a property in which a series of processes can be carried out repeatedly, the series of processes including, after curing and molding the prepreg, the semipreg, the prepreg laminate, or the semipreg laminate, deforming the prepreg, the semipreg, the prepreg laminate, or the semipreg laminate into another shape and re-curing the prepreg, the semipreg, the prepreg laminate, or the semipreg laminate by heating.

The semipreg or the prepreg preferably has a property in which the semipreg or the prepreg is capable of being cured in a free-standing state. Note, here, that, in the present specification, the "free-standing state" refers to a state in which a free-standing shape is maintained. Note also that the "free-standing shape" refers to an arbitrary shape which is desired to be imparted after molding and which does not need a physical support, for example, a curved shape.

In the present specification, the property in which the semipreg or the prepreg is capable of being cured in a free-standing state refers to a property in which, in a case where a laminate which includes the prepreg having an arbitrary shape that is desired to be imparted after molding, for example, a curved shape is heated with use of an oven or the like, the shape (free-standing shape) is maintained even after the heating without the need for a physical support. Note, here, that the laminate including the prepreg is also expressed as a prepreg laminate. Specifically, the property is a property in which, in a case where the prepreg laminate is heated with use of an oven or the like in a state in which one end of the prepreg laminate is fixed to a main surface of an object having a planar surface and the other end of the prepreg laminate is caused to float in the air, the shape before the heating (for example, a curved shape) is maintained even after the heating. In the present specification, the property in which the semipreg or the prepreg is capable of being cured in a free-standing state is also expressed as a free-standing property or a self-supporting property.

Since the semipreg or the prepreg has the free-standing property, it is possible to switch from molding with use of an autoclave to molding with use of an oven, in the middle of molding the composite material. In the molding with use of an oven, unlike the molding with use of an autoclave, it is possible to use a general-purpose subsidiary material (heat resistance is approximately 180°C in accordance with an epoxy). Therefore, it is preferable that the semipreg or the prepreg have the free-standing property because this makes it is possible to mold the composite material without the need for an expensive subsidiary material.

A method for molding the fiber composite material is not limited in particular, but may include the steps of: obtaining a prepreg or a semipreg by impregnating reinforcement fibers with the thermosetting resin or the composition; obtaining a preliminarily cured prepreg having a degree of cure of more than 0% to 99%, by preliminarily curing the prepreg or the semipreg; and obtaining the fiber composite material by curing the preliminarily cured prepreg. Note, here, that, in the present specification, preliminarily curing the prepreg or the semipreg means partially curing the prepreg or the semipreg. The above molding method may further include the step of deforming the prepreg or the semipreg before preliminarily curing the prepreg or the semipreg. Moreover, the molding method may further include the step of obtaining the preliminarily cured prepreg in a free-standing shape by deforming the preliminarily cured prepreg, before curing the preliminarily cured prepreg.

Note, here, that the degree of cure of the preliminarily cured prepreg may be not more than 99%, preferably not more than 90%, and more preferably not more than 80%. Although the preliminarily cured prepreg preferably has both the remoldability and the free-standing property, the degree of cure of the preliminarily cured prepreg which is preferable to have each property varies. In a case where the remoldability of the preliminarily cured prepreg is prioritized, the degree of cure is preferably more than 0% to 50%, more preferably more than 0% to 40%, even more preferably more than 0% to 30%, and most preferably more than 0% to 20%. On the other hand, in a case where the free-standing property of the preliminarily cured prepreg is prioritized, the degree of cure is preferably 50% to 99%, more preferably 60% to 99%, and most preferably 70% to 99%.

The preferable range of the degree of cure varies depending on whether the preliminarily cured prepreg is in a state before remolding or in a state after the remolding. This is because, in a case where the preliminarily cured prepreg is remolded, the degree of cure can be slightly increased. Therefore, the preferable range of the degree of cure varies between the preliminarily cured prepreg which is required to have the remoldability (i.e., a state before the remolding) and the preliminarily cured prepreg which is required to have the free-standing property (i.e., a state after the remolding).

### [5. Decomposition product and method for producing decomposition product]

The embodiments of the present invention also include a decomposition product which is obtained by decomposing the foregoing cured molded product under an acidic or basic condition and which is soluble in a solvent. Note, here, that the decomposition under the acidic condition is solvolysis. Examples of the decomposition under the basic condition include decomposition in which a basic substance is added to the imino group so that the imino group undergoes a cleavage reaction or a bond exchange reaction. The embodiments of the present invention also include a method for producing a decomposition product which is soluble in a solvent, the method including the step of decomposing the foregoing cured molded product under an acidic or basic condition. By decomposing the cured molded product under the acidic or basic condition, it is possible to cleave the imine bond in the cured molded product and possible to obtain the decomposition product. In the present specification, the solvolysis means cleaving the imine bond by a reaction between a solvent molecule and the imine bond to obtain the decomposition product.

Examples of a method for subjecting the cured molded product to the solvolysis under the acidic condition includes a method in which the cured molded product is brought into contact with an acidic solution containing an acid and a solvent. Examples of the solvent in the acidic solution include water, tetrahydrofuran (THF), and a mixed solvent thereof. Examples of the acid include acetic acid, hydrochloric acid, nitric acid, and sulfuric acid.

Examples of a method for decomposing the cured molded product under the basic condition include a method in which the cured molded product is brought into contact with an amine compound. The amine compound is not limited in particular, and examples thereof include: aromatic monoamines such as aniline; aromatic diamines such as p-phenylenediamine, 1,3-bis(4-aminophenoxy)benzene (RODA), and 4,4'-isopropylidene bis[(4-aminophenoxy)benzene] (BAPP); aliphatic monoamines such as methylamine, ethylamine, and butylamine; and aliphatic diamines such as ethylenediamine, trimethylenediamine, tetramethylenediamine, pentamethylenediamine, hexamethylenediamine, and m-xylene-α,α'-diamine (mXDA).

In the present specification, the "decomposition product which is soluble in a solvent" means, at least, a decomposition product which is dissolved in the acidic solution that is used for the solvolysis under the acidic condition or a basic solution that is used for the decomposition under the basic condition. Note, here, that it is possible to determine that the decomposition product is dissolved in a solvent when no solid content can be visually observed. The decomposition product may be redissolvable in various solvents after extracted as a solid content from the acidic solution or the basic solution. Examples of such solvents include N,N-dimethylformamide (DMF), tetrahydrofuran (THF), chloroform, N,N-dimethylacetamide, N-methyl-2-pyrrolidone, N,N-diethylacetamide, N-methylcaprolactam, γ-butyrolactone, cyclohexanone, dimethyl sulfoxide, cyclopentanone, 1,4-dioxane, and 1,3-dioxolane.

In the decomposition step, heating may be carried out. A heating temperature may be, for example, 40°C to 120°C. A heating time may be 5 minutes to 10 hours. In the decomposition step, stirring may be carried out as necessary.

The decomposition product can contain a monomer and/or an oligomer. As an example, the decomposition product can contain (i) an oligomer derived from the aromatic diamine compound (B1) and the phenol compound (A) which has an aldehyde group and (ii) the aromatic diamine compound (B2). Note that the decomposition product is obtained by, after curing the foregoing thermosetting resin once by ring opening polymerization, decomposing the cured molded product. That is, the decomposition product may not contain the benzoxazine ring structure. It is also possible to obtain the thermosetting resin by reacting such a decomposition product again.

Note that it is inferred that the decomposition product becomes soluble in a solvent by the cleavage of the imine bond. However, it is difficult to accurately grasp a degree of the cleavage of the imine bond. It is inferred that the decomposition product is a collection of various low molecular weight compounds, and it is realistically difficult to chemically identify all of these compounds. Therefore, there exist circumstances under which directly defining the decomposition product by its structure or properties is impossible or utterly impractical.

In a case where the cured molded product contains the reinforcement fibers, a part of the cured molded product other than the reinforcement fibers may be decomposed. In other words, in a case where the cured molded product contains the reinforcement fibers, at least a part other than the reinforcement fibers only needs to be decomposed in the decomposition step.

The decomposition product can be recovered and reused. For example, by drying a decomposition solution (the acidic or basic solution containing the decomposition product) or by mixing the decomposition solution with a poor solvent and precipitating and obtaining the solid content, the decomposition product can be recovered from the solvent. Subsequently, the cured molded product can also be obtained again by reacting the recovered decomposition product.

In a case where the cured molded product contains the reinforcement fibers, both the decomposition product and the reinforcement fibers can be recovered and reused. Specifically, the decomposition product and the reinforcement fibers are first separated by filtration, centrifugation, or the like, and then recovered. Thereafter, by drying the decomposition solution containing the decomposition product or by mixing the decomposition solution with a poor solvent and precipitating and obtaining the solid content, the decomposition product can be recovered from the solvent. Furthermore, by mixing the recovered decomposition product and the reinforcement fibers and reacting the decomposition product, the cured molded product containing the reinforcement fibers can also be obtained again.

According to the configuration as described above, the cured molded product can be decomposed and reused. This can contribute to ensuring sustainable consumption and production patterns. Therefore, it is possible to contribute to achieving and realizing, for example, Goal 12 "responsible consumption and production" of the Sustainable Development Goals (SDGs).

The present invention is not limited to the embodiments, but can be altered by a skilled person in the art within the scope of the claims. The present invention also encompasses, in its technical scope, any embodiment derived by combining technical means disclosed in differing embodiments.

Embodiments of the present invention may be configured as follows.
<1> A thermosetting resin which has, in a main chain, a benzoxazine ring structure represented by general formula (I).
<2> The thermosetting resin described in <1>, wherein the aromatic diamine compound (B1) is at least one selected from the group consisting of 1,4-diaminobenzene, 1,3-diaminobenzene, 2,4-diaminotoluene, 2,6-diaminotoluene, 3-(aminomethyl)benzylamine, 4-(aminomethyl)benzylamine, 3,3'-sulfonyldianiline, 4,4'-sulfonyldianiline, 3,3'-diaminobenzophenone, 4,4'-diaminobenzophenone, 1,3-bis(4-aminophenoxy)benzene, 1,3-bis(3-aminophenoxy)benzene, 2,2-bis[4-(4-aminophenoxy)phenyl]propane, bis[4-(4-aminophenoxy)phenyl]sulfone, 4,4'-bis(3-aminophenoxy)biphenyl, 4,4'-bis(4-aminophenoxy)biphenyl, and 9,9-bis(4-aminophenyl)fluorene.
<3> A composition containing a thermosetting resin described in <1> or <2>.
<4> An uncured molded product obtained by molding a thermosetting resin described in <1> or <2> or a composition described in <3>.
<5> A cured molded product obtained by curing a thermosetting resin described in <1> or <2>, a composition described in <3>, or an uncured molded product described in <4>.
<6> A decomposition product which is obtained by decomposing a cured molded product described in <5> under an acidic or basic condition and which is soluble in a solvent.
<7> A method for producing a decomposition product which is soluble in a solvent, including the step of
   decomposing a cured molded product described in <5> under an acidic or basic condition.
<8> A thermosetting resin which has a benzoxazine ring structure in a main chain, wherein
   an uncured molded product which is obtained by molding the thermosetting resin has remoldability and toughness,
   the remoldability refers to a property in which, after the uncured molded product is divided into a plurality of pieces, the plurality of pieces are capable of being integrated by heating at not higher than 200°C,
   the toughness refers to a property in which a break or a crack does not occur in the uncured molded product before and after the heating, and
   the remoldability and the toughness are maintained even in a case where division and integration and the heating are repeated once or more.
<9> A method for producing a thermosetting resin which has a benzoxazine ring structure in a main chain, including:
   a step (s1) of reacting a phenol compound (A), an aromatic diamine compound (B1), and an aldehyde compound (C); and
   a step (s2) of further reacting an aromatic diamine compound (B2), the method including the steps (s1) and (s2) in this order,
   the phenol compound (A) having an aldehyde group, and
   the aromatic diamine compound (B1) being represented by one or more of general formulas (IIa) to (Va).
<10> A prepreg or a semipreg each of which is obtained by impregnating reinforcement fibers with a thermosetting resin described in <1> or <2> or a composition described in <3>.
<11> The prepreg or the semipreg described in <10>, wherein the prepreg or the semipreg has a property in which the prepreg or the semipreg is capable of being repeatedly deformed and/or a property in which the prepreg or the semipreg is capable of being cured in a free-standing state.
<12> A fiber composite material obtained by impregnating reinforcement fibers with a thermosetting resin described in
<1> or <2> or a composition described in <3> and curing the thermosetting resin or the composition.
<13> A method for molding a fiber composite material, including the steps of:
   obtaining a prepreg or a semipreg by impregnating reinforcement fibers with a thermosetting resin described in <1> or <2> or a composition described in <3>;
   obtaining a preliminarily cured prepreg having a degree of cure of more than 0% to 99%, by preliminarily curing the prepreg or the semipreg; and
   obtaining the fiber composite material by curing the preliminarily cured prepreg.
<14> The method described in <13>, further including the step of
   deforming the prepreg or the semipreg before preliminarily curing the prepreg or the semipreg.
<15> The method described in <13>, further including the step of
   obtaining the preliminarily cured prepreg in a free-standing shape by deforming the preliminarily cured prepreg, before curing the preliminarily cured prepreg.
<16> A decomposition product which is obtained by subjecting a cured molded product described in <5> to solvolysis under an acidic condition and which is soluble in a solvent.
<17> A method for producing a decomposition product which is soluble in a solvent, including the step of
   subjecting a cured molded product described in <5> to solvolysis under an acidic condition.

### Examples

The following description will discuss examples of the present invention. Note that, in the following description, a benzoxazine compound corresponds to the thermosetting resin, a cured film corresponds to the cured molded product, and an uncured film corresponds to the uncured molded product.

### [I. Physical properties of uncured/cured resin film]

### [Test methods]

### <Analysis of structure of benzoxazine compound>

The molecular structure of a benzoxazine compound was analyzed. Specifically, ¹H-NMR measurement was carried out with use of a nuclei magnetic resonance device (NMR, AVANCEIII 400MHz, manufactured by Bruker) under the condition that the number of accumulations was 16 and a measurement temperature was room temperature.

### <Measurement of molecular weight of benzoxazine compound>

The molecular weights of the benzoxazine compound and a decomposition product of the benzoxazine compound were measured with use of a gel permeation chromatograph (GPC) (Prominence UFLC manufactured by Shimadzu Corporation). In each measurement, 0.01 mol/L of lithium chloridecontaining DMF was used as an eluent, three columns of TSKgel GMHHR-M which were connected in series were used, a flow rate was 1 mL/min, an injection volume was 20 pL, a column temperature was 40°C, an UV detector was used for detection, and polystyrene was used as a sample for a calibration curve.

Furthermore, the percentage of the benzoxazine compound which was a reaction intermediate and which remained was determined from an area ratio in a GPC curve of the benzoxazine compound.

### <Measurement of degree of cure 1 of cured film>

The degree of cure of a cured film was determined as follows. First, DSC curves were measured with use of a differential scanning calorimeter (DSC, DSC7000X manufactured by Hitachi High-Tech Science Corporation) at 5°C/min and a nitrogen flow rate of 40 mL/min. Next, the degree of cure was calculated from the amounts of heat generated before and after curing derived from ring opening of benzoxazine, with use of the following formula.

The degree of cure [%] = 100-{(the amount of the heat generated after the curing)/(the amount of the heat generated before the curing) × 100}

Note, here, that the amount of the heat generated before the curing indicates the area of an exothermic peak in the DSC curve of an uncured resin, and the amount of the heat generated after the curing indicates the area of an exothermic peak in the DSC curve of the cured film.

### <Glass transition temperatures (Tg) of uncured film and cured film>

The Tg of each of an uncured film and the cured film was measured with use of a dynamic viscoelasticity measurement device (DMA, RSA G2, manufactured by TA Instruments, tension mode) at a frequency (1Hz) and a temperature increase rate of 5°C/min. An extrapolated glass transition onset temperature (an intersection of a straight line obtained by extending, to a higher temperature region by extrapolation, a baseline before an inflection point and a tangent line at the inflection point) determined from an obtained DMA curve was regarded as the Tg in the present Examples.

### <Thermal stability of uncured film and cured film, and amount of solvent remaining in uncured film and cured film>

Regarding the thermal stability of each of the uncured film and the cured film, a 5% weight reduction temperature (Td5) was evaluated. The Td5 was measured with use of a thermogravimetric analyzer (STA7200, manufactured by Hitachi High-Tech Science Corporation) at a temperature increase rate of 5°C/min under a nitrogen gas stream at 200 mL/min. The amount of a solvent remaining in each of the uncured film and the cured film was also calculated from the same analysis.

### <Mechanical properties of uncured film and cured film>

A tensile test was carried out with respect to each of the uncured film and the cured film with use of a tensile test device (EZ-SX, manufactured by Shimadzu Corporation). A test temperature was room temperature. A tensile speed was 5 mm/min. The shape of a test piece was 40 mm long and 3 mm wide. By this test, a tensile modulus (tensile modulus), a tensile breaking strength (tensile strength), and a tensile elongation at break (elongation) were measured.

### <Decomposability evaluation 1 of cured film>

The cured film was added to a 2M HCl aqueous solution/THF (1/3, v/v) or a 3M HCl aqueous solution/THF (1/3, v/v), and then an obtained solution was heated and stirred at 50°C for 6 hours. A state after the heating and stirring was observed, and decomposability was evaluated in accordance with the following criteria.
A: The cured film was dissolved (it was evaluated that the cured film exhibited decomposability).
B: The cured film was not dissolved (it was evaluated that the cured film did not exhibit decomposability).

### <Decomposability evaluation 2 of cured film>

The cured film and various amines were added to DMF, and then an obtained solution was heated and stirred at 100°C. A state after the heating and stirring was observed, and decomposability was evaluated in accordance with the following criteria.
A: The cured film was dissolved (it was evaluated that the cured film exhibited decomposability).
B: The cured film was not dissolved (it was evaluated that the cured film did not exhibit decomposability).

### [Materials]

Materials used to produce the benzoxazine compound are shown below.

### (Phenol compound having aldehyde group)

· 4-hydroxybenzaldehyde (manufactured by FUJIFILM Wako Pure Chemical Corporation)

### (Aromatic diamine compound)

· 1,3-bis(4-aminophenoxy)benzene (manufactured by Seika Corporation)
· m-xylene-α,α'-diamine (manufactured by FUJIFILM Wako Pure Chemical Corporation)

### (Other compounds)

· Paraformaldehyde (manufactured by FUJIFILM Wako Pure Chemical Corporation)

Materials used in the decomposability evaluation 2 of the benzoxazine compound are shown below.

### (Amine compound)

· 1,3-bis(4-aminophenoxy)benzene (RODA: manufactured by Seika Corporation)
· m-xylene-α,α'-diamine (mxDA: manufactured by FUJIFILM Wako Pure Chemical Corporation)
· Hexamethylenediamine (manufactured by Toray Industries, Inc.)

### [Production Example 1]

To a reaction container equipped with a stirrer, 1,3-bis(4-aminophenoxy)benzene (6.0000 g, 0.0205 mol), paraformaldehyde (2.5886 g, 0.0862 mol), 4-hydroxybenzaldehyde (5.0128 g, 0.0410 mol), and toluene (31.7366 g) were added. These were reacted for 6 hours, while being refluxed. After an obtained reaction solution (A) was cooled to room temperature, the reaction solution (A) was dropped in stirred hexane (500 mL), so that a viscous precipitate was obtained. After a supernatant was removed, the precipitate was washed and stirred in methanol (500 mL), and then filtration was carried out. The obtained precipitate was dried at room temperature under reduced pressure for 2 hours with use of a vacuum dryer to obtain a benzoxazine compound (a), which was a reaction intermediate. The molecular weights of the obtained benzoxazine compound (a) were measured by GPC measurement. As a result, the benzoxazine compound (a) had a weight average molecular weight (Mw) of 1,039 and a number average molecular weight (Mn) of 940. By ¹H-NMR measurement (deuterated solvent was CDCl₃), a decrease in peak of an aldehyde group of 4-hydroxybenzaldehyde at 9.9 ppm and generation of peaks of a benzoxazine ring at 4.6 ppm and 5.4 ppm were observed. It was confirmed from the former that the raw materials were consumed, and it was confirmed from the latter that the benzoxazine compound (a) could be synthesized.

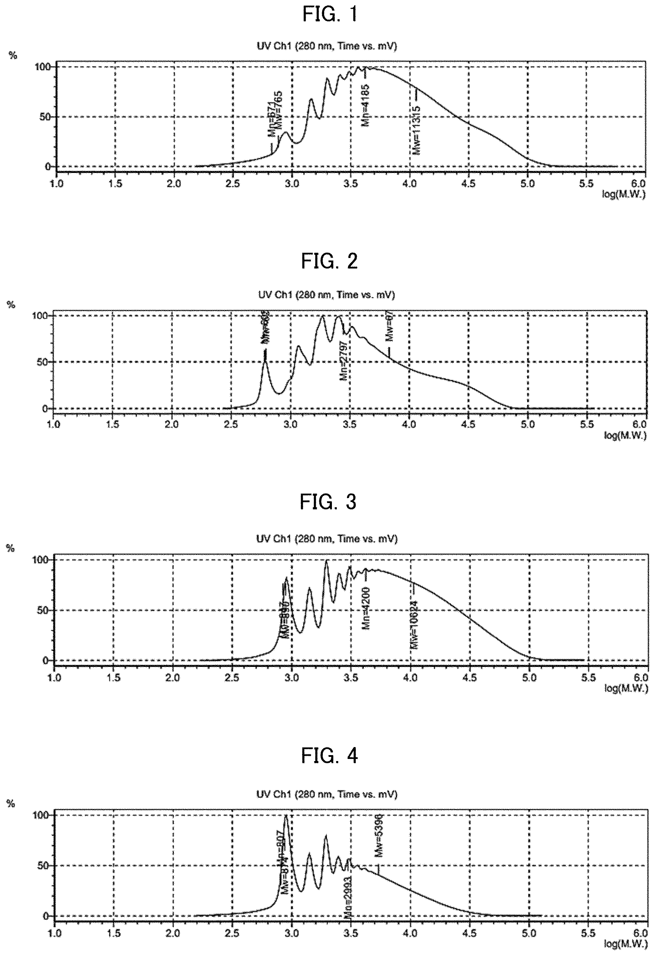

Subsequently, to a reaction container equipped with a stirrer, the obtained benzoxazine compound (a) (5.0000 g, 0.0086 mol), 1,3-bis(4-aminophenoxy)benzene (2.3809 g, 0.0081 mol), and chloroform (17.2220 g) were added. These were reacted for 2 hours, while being refluxed. After an obtained reaction solution (B) was cooled to room temperature, 20 mL of chloroform was added. An obtained solution was dropped in stirred methanol (300 mL), and then filtration was carried out. This operation was repeated once more, and then drying was carried out at 85°C under reduced pressure for 1.5 hours with use of a vacuum dryer to obtain an imino group-containing benzoxazine compound (b), which was a target object. The molecular weights of the obtained target object were measured by GPC measurement. As a result, the target object had a weight average molecular weight (Mw) of 10,668 and a number average molecular weight (Mn) of 3,167. By ¹H-NMR measurement (deuterated solvent was CDCl₃), a decrease in peak of an aldehyde terminal (reaction intermediate) at 9.8 ppm and generation of a peak of an imino group (product) at 8.3 ppm were observed, and it was confirmed that the target object could be synthesized. It was observed at 3.62 ppm that a slight amount of an amino group (raw material) remained. As has been described, in Production Example 1, 1,3-bis(4-aminophenoxy)benzene was used as the aromatic diamine compound (B1) and the aromatic diamine compound (B2). Fig. 1 is a GPC chart of the imino group-containing benzoxazine compound (b) in Production Example 1. According to the area ratio in the GPC chart, the benzoxazine compound (a) which remained was 6.1%.

### [Production Example 2]

To a reaction container equipped with a stirrer, m-xylene-α,α'-diamine (5.0000 g, 0.0367 mol), paraformaldehyde (4.6305 g, 0.1542 mol), 4-hydroxybenzaldehyde (8.9669 g, 0.0734 mol), and toluene (43.3905 g) were added. These were reacted for 4 hours, while being refluxed. After an obtained reaction solution (C) was cooled to room temperature, the reaction solution (C) was dropped in stirred hexane (300 mL), so that a viscous precipitate was obtained. After a supernatant was removed, the precipitate was washed and stirred in methanol (300 mL), and then filtration was carried out. The obtained precipitate was dried at room temperature under reduced pressure for 1 hour with use of a vacuum dryer to obtain a benzoxazine compound (c), which was a reaction intermediate. The molecular weights of the obtained benzoxazine compound (c) were measured by GPC measurement. As a result, the benzoxazine compound (c) had a weight average molecular weight (Mw) of 641 and a number average molecular weight (Mn) of 623. By ¹H-NMR measurement (deuterated solvent was CDCl₃), a decrease in peak of an aldehyde group of 4-hydroxybenzaldehyde at 9.9 ppm and generation of peaks of a benzoxazine ring at 4.6 ppm and 5.4 ppm were observed. It was confirmed from the former that the raw materials were consumed, and it was confirmed from the latter that the benzoxazine compound (c) could be synthesized.

Subsequently, to a reaction container equipped with a stirrer, the obtained benzoxazine compound (c) (5.0000 g, 0.0117 mol), 1,3-bis(4-aminophenoxy)benzene (3.2484 g, 0.0111 mol), and chloroform (19.2462 g) were added. These were reacted for 2 hours, while being refluxed. After an obtained reaction solution (d) was cooled to room temperature, 10 mL of chloroform was added. An obtained solution was dropped in stirred methanol (200 mL), and then filtration was carried out. This operation was repeated once more, and then drying was carried out at 85°C under reduced pressure for 1.5 hours with use of a vacuum dryer to obtain an imino group-containing benzoxazine compound (d), which was a target object. The molecular weights of the obtained target object were measured by GPC measurement. As a result, the obtained target object had a weight average molecular weight (Mw) of 6,357 and a number average molecular weight (Mn) of 2,251. By ¹H-NMR measurement (deuterated solvent was CDCl₃), a decrease in peak of an aldehyde terminal (reaction intermediate) at 9.8 ppm and generation of a peak of an imino group (product) at 8.3 ppm were observed, and it was confirmed that the target object could be synthesized. As has been described, in Production Example 2, m-xylene-α,α'-diamine was used as the aromatic diamine compound (B1), and 1,3-bis(4-aminophenoxy)benzene was used as the aromatic diamine compound (B2). Fig. 2 is a GPC chart of the imino group-containing benzoxazine compound (d) in Production Example 2.

### [Production Example 3]

A benzoxazine compound (e) was obtained by changing, in Production Example 1, the amount of 1,3-bis(4-aminophenoxy)benzene to 20.0000 g (0.0684 mol), the amount of paraformaldehyde to 8.6287 g (0.2873 mol), the amount of 4-hydroxybenzaldehyde to 16.7093 g (0.1368 mol), and the amount of toluene to 105.7887 g. Molecular weights were measured as in Production Example 1. As a result, the benzoxazine compound (e) had a weight average molecular weight (Mw) of 1,090 and a number average molecular weight (Mn) of 898. By ¹H-NMR measurement (deuterated solvent was CDCl₃), it was confirmed that the benzoxazine compound (e) could be synthesized, as in Production Example 1.

Subsequently, an imino group-containing benzoxazine compound (f), which was a target object, was similarly obtained by changing the amount of the benzoxazine compound (e) to 2.8560 g (0.0049 mol), the amount of 1,3-bis(4-aminophenoxy)benzene to 0.9520 g (0.0032 mol), the amount of chloroform to 8.8853 g, and a time for which a reaction was carried out while reflux was carried out to 7 hours. The molecular weights of the obtained target object were measured as in Production Example 1. As a result, the target object had a weight average molecular weight (Mw) of 9,693 and a number average molecular weight (Mn) of 3,047. By ¹H-NMR measurement (deuterated solvent was CDCl₃ and d-DMSO), it was confirmed that the target object could be synthesized, as in Production Example 1. Peaks at 3.62 ppm (CDCl₃) and 5.0 ppm (d-DMSO) which corresponded to an amino group of the raw material were not observed. Fig. 3 is a GPC chart of the imino group-containing benzoxazine compound (f) in Production Example 3. According to the area ratio in the GPC chart, the benzoxazine compound (e) which remained was 11.2%.

### [Production Example 4]

A benzoxazine compound (g) was obtained by changing, in Production Example 1, the amount of 1,3-bis(4-aminophenoxy)benzene to 20.0000 g (0.0684 mol), the amount of paraformaldehyde to 8.6287 g (0.2873 mol), the amount of 4-hydroxybenzaldehyde to 16.7093 g (0.1368 mol), and the amount of toluene to 105.7887 g. Molecular weights were measured as in Production Example 1. As a result, the benzoxazine compound (g) had a weight average molecular weight (Mw) of 1,090 and a number average molecular weight (Mn) of 898. By ¹H-NMR measurement (deuterated solvent was CDCl₃), it was confirmed that the benzoxazine compound (g) could be synthesized, as in Production Example 1.

Subsequently, an imino group-containing benzoxazine compound (h), which was a target object, was similarly obtained by changing the amount of the benzoxazine compound (g) to 2.8560 g (0.0049 mol), the amount of 1,3-bis(4-aminophenoxy)benzene to 0.7140 g (0.0024 mol), the amount of chloroform to 8.3299 g, and a time for which a reaction was carried out while reflux was carried out to 7 hours. The molecular weights of the obtained target object were measured as in Production Example 1. As a result, the target object had a weight average molecular weight (Mw) of 4,427 and a number average molecular weight (Mn) of 1,894. By ¹H-NMR measurement (deuterated solvent was CDCl₃ and d-DMSO), it was confirmed that the target object could be synthesized, as in Production Example 1. Peaks at 3.62 ppm (CDCl₃) and 5.0 ppm (d-DMSO) which corresponded to an amino group of the raw material were not observed. Fig. 4 is a GPC chart of the imino group-containing benzoxazine compound (h) in Production Example 4. According to the area ratio in the GPC chart, the benzoxazine compound (e) which remained was 20.7%.

### [Production Example 5]

A benzoxazine compound (i) was obtained by changing, in Production Example 1, the amount of 1,3-bis(4-aminophenoxy)benzene to 160.0000 g (0.5473 mol), the amount of paraformaldehyde to 69.0298 g (2.2987 mol), the amount of 4-hydroxybenzaldehyde to 133.6745 g (1.0946 mol), and the amount of toluene to 846.3099 g. Molecular weights were measured as in Production Example 1. As a result, the benzoxazine compound (i) had a weight average molecular weight (Mw) of 1,110 and a number average molecular weight (Mn) of 977. By ¹H-NMR measurement (deuterated solvent was CDCl₃), it was confirmed that the benzoxazine compound (i) could be synthesized, as in Production Example 1.

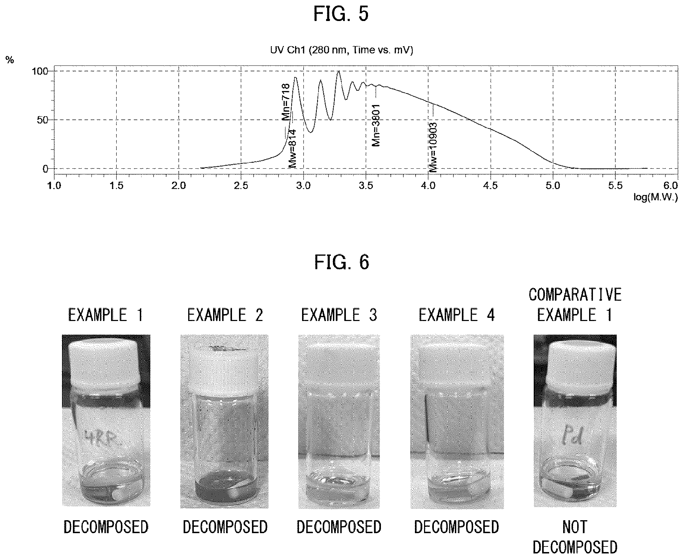

Subsequently, an imino group-containing benzoxazine compound (j), which was a target object, was similarly obtained by changing the amount of the benzoxazine compound (i) to 321.0320 g (0.5491 mol), the amount of 1,3-bis(4-aminophenoxy)benzene to 107.0070 g (0.3660 mol), the amount of chloroform to 998.7577 g, and a time for which a reaction was carried out while reflux was carried out to 7 hours. The molecular weights of the obtained target object were measured as in Production Example 1. As a result, the target object had a weight average molecular weight (Mw) of 9,596 and a number average molecular weight (Mn) of 2,442. By ¹H-NMR measurement (deuterated solvent was CDCl₃ and d-DMSO), it was confirmed that the target object could be synthesized, as in Production Example 1. Peaks at 3.62 ppm (CDCl₃) and 5.0 ppm (d-DMSO) which corresponded to an amino group of the raw material were not observed. Fig. 5 is a GPC chart of the imino group-containing benzoxazine compound (j) in Production Example 5. According to the area ratio in the GPC chart, the benzoxazine compound (e) which remained was 13.0%.

### [Example 1]

The imino group-containing benzoxazine compound (b) obtained in Production Example 1 was put in a PI film-shaped frame (8 cm × 8 cm) having a thickness of 75 µm, and pressed together with a Teflon (registered trademark) sheet (release paper) and a stainless steel plate to obtain an uncured film and a cured film. As a pressing machine, MINI TEST PRESS-10 (manufactured by Toyo Seiki Seisaku-sho, Ltd.) was used. Processing conditions for obtaining the uncured film and the cured film were as follows.
The uncured film: a press at 5 MPa was carried out at 150°C for 45 minutes.
The cured film: a press at 5 MPa was carried out while a temperature was increased in the following manner: at 150°C for 45 minutes, at 190°C for 2 hours, and then at 220°C for 1 hour.

### [Example 2]

A benzoxazine solution (27 wt%) was prepared by dissolving, in 1,4-dioxane, the imino group-containing benzoxazine compound (b) obtained in Production Example 1. A PP plate (base material) was fixed on a smooth glass, and the benzoxazine solution was casted on the base material with use of a glass rod. A Teflon (registered trademark) sheet was used to adjust a thickness. Thereafter, the base material on which the benzoxazine solution was casted was covered with a vat so that steep volatilization of the solvent was prevented, and then left to stand still overnight.

From an obtained casted film, an uncured film and a cured film were obtained under the following processing conditions.
The uncured film: the casted film was heated at 50°C for 30 minutes, at 75°C for 30 minutes, and then at 90°C for 30 minutes with use of an oven.
The cured film: the casted film was heated at 50°C for 30 minutes, at 75°C for 30 minutes, and then at 90°C for 30 minutes with use of an oven, and, subsequently, a press at 2 MPa was carried out with respect to an obtained self-supporting film while a temperature was increased in the following manner: at 95°C for 1 hour, at 120°C for 1 hour, at 150°C for 1 hour, at 190°C for 2 hours, and then 220°C for 1 hour. As a pressing machine, AYSR-10 (manufactured by Shinto Metal Industries, Ltd.) was used.

### [Example 3]

The imino group-containing benzoxazine compound (d) obtained in Production Example 2 was put in a PI film-shaped frame (8 cm × 8 cm) having a thickness of 75 µm, and pressed together with a Teflon (registered trademark) sheet (release paper) and a stainless steel plate to obtain an uncured film and a cured film. As a pressing machine, MINI TEST PRESS-10 (manufactured by Toyo Seiki Seisaku-sho, Ltd.) was used. Processing conditions for obtaining the uncured film and the cured film were as follows.
The uncured film: a press at 4 MPa was carried out at 150°C for 45 minutes.
The cured film: a press at 4 MPa was carried out while a temperature was increased in the following manner: at 150°C for 45 minutes, at 190°C for 2 hours, and then at 220°C for 1 hour.

### [Example 4]

A benzoxazine solution (12 wt%) was prepared by dissolving, in chloroform, the imino group-containing benzoxazine compound (d) obtained in Production Example 2. A PP plate (base material) was fixed on a smooth glass, and the benzoxazine solution was casted on the base material with use of a glass rod. A Teflon (registered trademark) sheet was used to adjust a thickness. Thereafter, the base material on which the benzoxazine solution was casted was covered with a vat so that steep volatilization of the solvent was prevented, and then left to stand still overnight.

From an obtained casted film, an uncured film and a cured film were obtained under the following processing conditions.
The uncured film: the casted film was heated at 100°C for 15 minutes with use of an oven.
The cured film: the casted film was heated at 100°C for 15 minutes with use of an oven, and, subsequently, an obtained self-supporting film was further heated at 150°C for 45 minutes, at 190°C for 2 hours, and then at 220°C for 1 hour with use of an oven.

### [Example 5]

The imino group-containing benzoxazine compound (f) obtained in Production Example 3 was put in a PI film-shaped frame (6 cm × 4 cm) having a thickness of 125 µm, and pressed together with a Teflon (registered trademark) sheet (release paper) and a stainless steel plate to obtain a cured film. As a pressing machine, MINI TEST PRESS-10 (manufactured by Toyo Seiki Seisaku-sho, Ltd.) was used. Processing conditions for obtaining the cured film were as follows.
The cured film: a press at 5 MPa was carried out while a temperature was increased in the following manner: at 150°C for 45 minutes, at 190°C for 2 hours, and then at 220°C for 1 hour.

### [Example 6]

A benzoxazine solution (50 wt%) was prepared by dissolving, in 1,3-dioxolane, the imino group-containing benzoxazine compound (j) obtained in Production Example 5. A NITOFLON film No. 900UL (base material) was fixed on a smooth glass, and the benzoxazine solution was casted on the base material with use of a glass rod. A Teflon (registered trademark) sheet was used to adjust a thickness. Thereafter, the base material on which the benzoxazine solution was casted was covered with a vat so that steep volatilization of the solvent was prevented, and then left to stand still overnight.

From an obtained casted film, a cured film was obtained under the following processing conditions.
The cured film: the casted film was heated at 50°C for 30 minutes, at 70°C for 30 minutes, at 80°C for 2 hours, and then at 120°C for 1 hour with use of a vacuum laminator, and, subsequently, a press at 2 MPa was carried out with respect to an obtained self-supporting film while a temperature was increased in the following manner: at 150°C for 1 hour, at 190°C for 2 hours, and then at 220°C for 1 hour. As a pressing machine, AYSR-10 (manufactured by Shinto Metal Industries, Ltd.) was used.

### [Comparative Example 1]

A publicly known benzoxazine compound, 3,3'-(methylene-1,4-diphenylene)bis(3,4-dihydro-2H-1,3-benzoxazine) (P-d) (manufactured by Shikoku Chemicals Corporation), was put in a PI film-shaped frame (6 cm × 4 cm) having a thickness of 125 µm, and pressed together with a Teflon (registered trademark) sheet (release paper) and a stainless steel plate to obtain a cured film. As a pressing machine, MINI TEST PRESS-10 (manufactured by Toyo Seiki Seisaku-sho, Ltd.) was used. Processing conditions for obtaining the cured film were as follows.
The cured film: a press at 5 MPa was carried out while a temperature was increased in the following manner: at 180°C for 30 minutes, at 200°C for 30 minutes, and then at 220°C for 2 hours.

### [Evaluation result 1: Various physical properties and hydrolyzability of film)

Table 1 below shows physical properties in each of Examples and Comparative Examples. Fig. 6 shows a result of a hydrolyzability evaluation test (decomposability evaluation 1) in each of Examples and Comparative Examples. Note that, in Fig. 6, cylindrical objects which are commonly observed in containers in Examples and Comparative Examples are stirrers. Only in Comparative Example 1, it can be observed that a film-like object further remains in the container.

**[Table 1]**

| | | Decomposability | Degree of Cure [%] | Remaining Solvent Amount [%] | Tg [°C] | Td5 [°C] | Tensile Modulus [GPa] | Tensile Strength [MPa] | Elongation [%] |
|---|---|---|---|---|---|---|---|---|---|
| Example 1 | Uncured | - | - | 2.4 | 128.1 | 331 | 2.1±0.3 | 89±6.0 | 8.2±1.0 (max 10) |
| | Cured | A | 99.7 | 1 | 239 | 339 | 2.3±0.2 | 85±10.0 | 4.9±1.0 (max 6.1) |
| Example 2 | Uncured | - | - | 14.1 | 58 | 145 | - | - | - |
| | Cured | A | 100 | 0 | 233 | 324 | 3.0±0.5 | 93±31.7 | 3.8±1.6 (max 5.6) |
| Example 3 | Uncured | - | - | 2 | 89, 107 | 306 | 2.9±0.1 | 86± 5.0 | 4.3±0.3 (max 5.0) |
| | Cured | A | 86.7 | 1 | 236 | 327 | 2.9±0.1 | 96±14.0 | 5.2±1.0 (max 6.0) |
| Example 4 | Uncured | - | - | 24.5 | 115 | 114 | - | - | - |
| | Cured | A | - | 1.1 | - | 308 | 2.7±0.2 | 31±6.0 | 1.2±0.3 |
| | | | | | | | | | (max 1.5) |
| Example 5 | Cured | - | 100 | 0.3 | 239 | 372 | 3.0±0.2 | 67±15.9 | 2.9±0.7 |
| | | | | | | | | | (max 1.5) |
| Example 6 | Cured | - | 100 | 0.6 | 325 | 373 | 2.9±0.2 | 64±18.4 | 2.8±0.9 |
| | | | | | | | | | (max 1.5) |
| Comparative Example 1 | Cured | B | 100 | 1.5 | 180 | 330 | 3.1±0.3 | 76±10.0 | 3.1±0.6 |
| | | | | | | | | | (max 3.7) |

### (Conclusion)

From Table 1 and Fig. 6, it was found that the cured films in Examples 1 to 4 exhibited hydrolyzability. It is considered that these cured films each exhibited hydrolyzability due to a dynamic covalent bond (imine bond) introduced into a main chain, despite being a cured product of a thermosetting resin. Exhibiting hydrolyzability under evaluation conditions of the present Examples means that low molecular weight compounds can be produced by chemically decomposing a cured product of a benzoxazine compound, in other words, a cured product of a thermosetting resin. Therefore, it is also considered possible to recycle, for example, chemically recycle the cured product of the thermosetting resin in accordance with an embodiment of the present invention.

In contrast, it was found that the cured film in Comparative Example 1 did not exhibit hydrolyzability. Not only this Comparative Example but also a cured product of a general thermosetting resin do not have a dynamic covalent bond. Therefore, it is considered that the cured film in Comparative Example 1 did not exhibit hydrolyzability under the evaluation conditions of the present Examples.

It was also found, from Table 1, that the cured films in Examples 1 to 3, 5, and 6 had a higher Tg and were more excellent in heat resistance than the cured film in Comparative Example 1. In Examples 5 and 6, the Td5, in addition to the Tg, was improved. Thus, it can be said that the cured films in Examples 5 and 6 were also excellent in chemical heat resistance.

### [Evaluation result 2: Amine decomposability of cured film]

Subsequently, an amine decomposability evaluation test (decomposability evaluation 2) was carried out.

### [Example 7]

To a reaction container equipped with a stirrer, the cured film (0.008 g) of the imino group-containing benzoxazine compound (b) obtained in Production Example 1, 1,3-bis(4-aminophenoxy)benzene (0.08 g), and 1 mL of DMF were added. These were reacted at 100°C for 8 hours.

### [Example 8]

To a reaction container equipped with a stirrer, the cured film (0.008 g) of the imino group-containing benzoxazine compound (f) obtained in Production Example 3, m-xylene-α,α'-diamine (0.8 g), and 1 mL of DMF were added. These were reacted at 100°C for 2 hours.

### [Example 9]

To a reaction container equipped with a stirrer, the cured film (0.008 g) of the imino group-containing benzoxazine compound (j) obtained in Production Example 5, m-xylene-α,α'-diamine (0.8 g), and 1 mL of DMF were added. These were reacted at 100°C for 1 hour.

### [Example 10]

To a reaction container equipped with a stirrer, the cured film (0.008 g) of the imino group-containing benzoxazine compound (j) obtained in Production Example 5, hexamethylenediamine (0.4 g), and 1 mL of DMF were added. These were reacted at 100°C for 1 hour.

### [Example 11]

To a reaction container equipped with a stirrer, the cured film (0.008 g) of the imino group-containing benzoxazine compound (j) obtained in Production Example 5, hexamethylenediamine (0.008 g), and 1 mL of DMF were added. These were reacted at 100°C for 5 hours.

### [Comparative Example 2]

To a reaction container equipped with a stirrer, the cured film (0.008 g) obtained in Comparative Example 1, 1,3-bis(4-aminophenoxy)benzene (0.08 g), and 1 mL of DMF were added. These were reacted at 100°C for 8 hours.

### [Comparative Example 3]

To a reaction container equipped with a stirrer, the cured film (0.008 g) obtained in Comparative Example 1, m-xylene-α,α'-diamine (0.08 g), and 1 mL of DMF were added. These were reacted at 100°C for 1 hour.

### [Comparative Example 4]

To a reaction container equipped with a stirrer, the cured film (0.008 g) obtained in Comparative Example 1, hexamethylenediamine (0.4 g), and 1 mL of DMF were added. These were reacted at 100°C for 1 hour.

### [Comparative Example 5]

To a reaction container equipped with a stirrer, the cured film (0.008 g) obtained in Comparative Example 1, hexamethylenediamine (0.008 g), and 1 mL of DMF were added. These were reacted at 100°C for 5 hour.

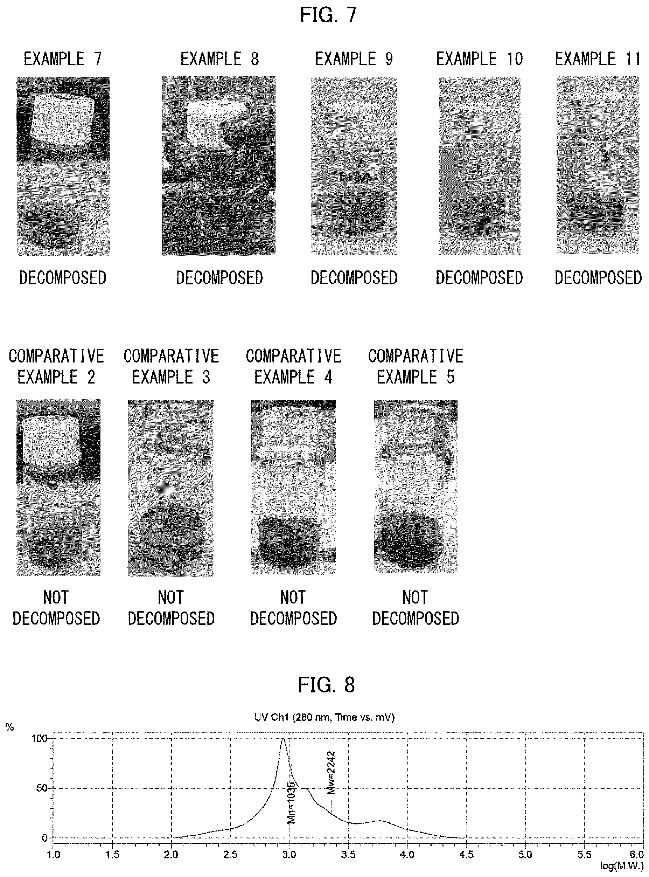

Table 2 below shows physical properties in each of Examples and Comparative Examples. Fig. 7 shows a result of the amine decomposability evaluation test (decomposability evaluation 2) in each of Examples and Comparative Examples. Note that, in Fig. 7, cylindrical objects which are commonly observed in containers in Examples and Comparative Examples are stirrers. In Comparative Examples 2 to 5, it can be observed that film-like objects further remain in the containers.

Regarding Example 11, a GPC chart of a decomposition solution after the amine decomposability evaluation test is shown in Fig. 8. The molecular weights of an obtained decomposition product were measured. As a result, the decomposition product had a weight average molecular weight (Mw) of 2,242 and a number average molecular weight (Mn) of 1,035. It can be confirmed that the cured film was decomposed and had a low molecular weight.

**[Table 2]**

| | Powder Used for Cured Film | Cured Film | Conditions | | | | | | Decomposability |
|---|---|---|---|---|---|---|---|---|---|
| | | | Type of Amine | Added Amount (Weight Ratio) | | Solvent | Temperature (°C) | Time (h) | |
| | | | | Amine | Cured Film | | | | |
| Example 7 | Production Example 1 | Example 2 | RODA | 10 | 1 | DMF | 100 | 8 | A |
| Example 8 | Production Example 3 | Example 5 | mxDA | 100 | 1 | DMF | 100 | 2 | A |
| Example 9 | Production Example 5 | Example 6 | mxDA | 100 | 1 | DMF | 100 | 1 | A |
| Example 10 | Production Example 5 | Example 6 | Hexamethylenediamine | 50 | 1 | DMF | 100 | 1 | A |
| Example 11 | Production Example 5 | Example 6 | Hexamethylenediamine | 1 | 1 | DMF | 100 | 5 | A |
| Comparative Example 2 | p-d | Comparative Example 1 | RODA | 10 | 1 | DMF | 100 | 8 | B |
| Comparative Example 3 | p-d | Comparative Example 1 | mxDA | 100 | 1 | DMF | 100 | 1 | B |
| Comparative Example 4 | p-d | Comparative Example 1 | Hexamethylenediamine | 50 | 1 | DMF | 100 | 1 | B |
| Comparative Example 5 | p-d | Comparative Example 1 | Hexamethylenediamine | 1 | 1 | DMF | 100 | 5 | B |

### (Conclusion)

It was found, from Table 2 and Fig. 7, that the cured films in Examples 7 to 11 exhibited amine decomposability. It is considered that these cured films each exhibited decomposability due to an imine exchange reaction, with the added amine, of the dynamic covalent bond (imine bond) introduced into the main chain, despite being a cured product of a thermosetting resin. Exhibiting decomposability under the evaluation conditions of the present Examples means that low molecular weight compounds can be produced by chemically decomposing a cured product of a benzoxazine compound, in other words, a cured product of a thermosetting resin. Therefore, it is also considered possible to recycle, for example, chemically recycle the cured product of the thermosetting resin in accordance with an embodiment of the present invention.

In contrast, it was found that the cured films in Comparative Example 2 (decomposition conditions corresponding to Example 7), Comparative Example 3 (decomposition conditions corresponding to Examples 8 and 9), Comparative Example 4 (decomposition conditions corresponding to Example 10), and Comparative Example 5 (decomposition conditions corresponding to Example 11) did not exhibit amine decomposability. Not only these comparative examples but also a cured product of a general thermosetting resin do not have a dynamic covalent bond. Therefore, it is considered that the cured films in Comparative Examples 2 to 5 did not exhibit decomposability under the evaluation conditions of the present Examples.

As is clear from the above, the cured product of the benzoxazine compound in accordance with an embodiment of the present invention, which contains the dynamic covalent bond, exhibits amine decomposability. It is considered that this makes it possible to recycle the cured product in which the benzoxazine compound in accordance with an embodiment of the present invention is used as a thermosetting resin, by decomposing the cured resin. Furthermore, in the carbon fiber composite material in which the benzoxazine compound in accordance with an embodiment of the present invention is used as a thermosetting resin, it is considered possible to recycle not only the resin but also the carbon fibers by decomposing the cured resin component.

### [Evaluation result 3: remoldability of uncured film]

### [Test methods]

### <Measurement of degree of cure of uncured film>

The degree of cure of an uncured film was determined as follows. First, DSC curves were measured with use of a differential scanning calorimeter (DSC, DSC7000X manufactured by Hitachi High-Tech Science Corporation) at 5°C/min and a nitrogen flow rate of 40 mL/min. Next, the degree of cure was calculated from the amounts of heat generated before and after curing derived from ring opening of benzoxazine, with use of the following formula. The degree of cure [%] = 100-{(the amount of the heat generated after the curing)/(the amount of the heat generated before the curing) × 100}

Note, here, that the amount of the heat generated before the curing indicates the area of an exothermic peak in the DSC curve of an uncured resin, and the amount of the heat generated after the curing indicates the area of an exothermic peak in the DSC curve of a cured film.

### (Criteria of evaluation of toughness)

A ··· No break or crack was observed in the film.
B ··· A break or crack was observed in the film.

### (Criteria of evaluation of remoldability)

A ··· Integration was successful to such a degree that separation was impossible.
B ··· Integration was not successful, and re-separation was possible.

### [Example 12]

The imino group-containing benzoxazine compound (j) obtained in Production Example 5 was put in a PI film-shaped frame (6 cm × 4 cm) having a thickness of 125 µm, and pressed together with a Teflon (registered trademark) sheet (release paper) and a stainless steel plate to obtain an uncured film. The obtained uncured film had a degree of cure of 0%. As a pressing machine, AYSR-10 (manufactured by Shinto Metal Industries, Ltd.) was used. Processing conditions for obtaining the uncured film were as follows.
The uncured film: a press at 2 MPa was carried out at 150°C for 1 hour.

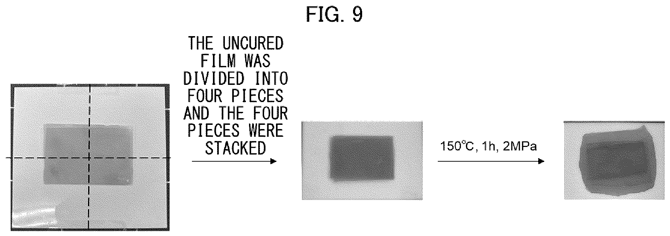

The obtained uncured film was cut into 4 pieces. These pieces were stacked and molded by pressing the pieces at 2 MPa and 150°C for 1 hour (the same conditions as those when the uncured film was molded). As a result, the pieces were integrated to such a degree that the pieces could not be separated. No break or a crack was observed when the remolded film was taken out. A result is shown below. Fig. 9 shows a result of evaluating the remoldability of the uncured film in Example.
· Result of evaluation of toughness: A
· Result of evaluation of remoldability: A

### (Conclusion)

From Fig. 8, it was found that the uncured film in Example 12 exhibited remoldability, that is, a property in which, after the uncured molded product was divided into a plurality of pieces, the plurality of pieces could be integrated. It was also found that the uncured film in Example 12 exhibited toughness, that is, a property in which no break or crack occurred in the uncured molded product before and after heating for remolding.

### [II. Physical properties of prepreg/carbon fiber composite material (CFRP)]

Examples of a prepreg and a CFRP in each of which the present invention was used is described below.

### [Materials]

Materials used in evaluation 3 of a benzoxazine compound are shown below.

### (Carbon fiber plain weave material)

· PAN-based carbon fibers manufactured by Toray Industries, Inc. (product name: CO6343B, fiber weight: 198 g/m², density: 1.76 g/cm³)

Note that a sizing agent was removed from the PAN-based carbon fibers manufactured by Toray Industries, Inc., by heating the PAN-based carbon fibers at 300°C for 1.5 hours in a convection oven.

### (Amine decomposability of CFRP)

· Hexamethylenediamine (manufactured by Toray Industries, Inc.)

### [Evaluation result 4: preparation and evaluation of prepreg/CFRP]

### <Preparation of prepreg)

### [Example 13]

A 50 wt% solution was prepared by dissolving, in 1,3-dioxolane, the imino group-containing benzoxazine compound (j) prepared in Production Example 5. The carbon fiber plain weave material was impregnated with the obtained 50 wt% solution, and then dried at room temperature for 3 hours to obtain prepregs.

### <Preparation of CFRP>

### [Example 14]

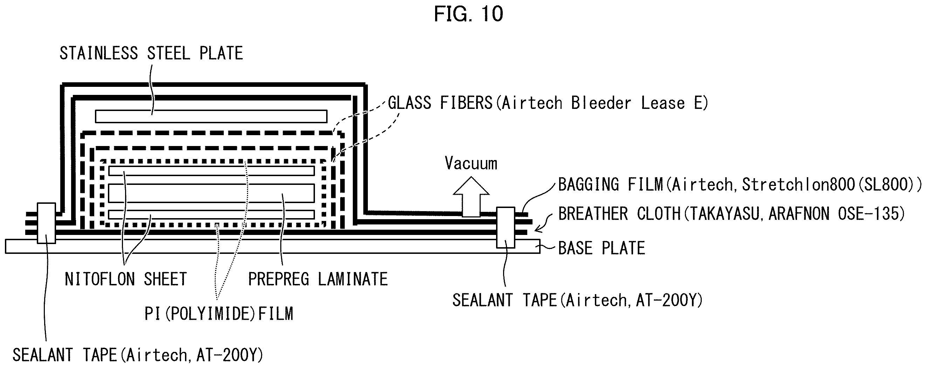

The prepregs prepared in Example 13 were stacked to obtain a 12-layer prepreg. The obtained laminated prepreg was sandwiched between two NITOFLON sheets (release paper) (in Fig. 10, white rectangles shown on and under the laminated prepreg), and wrapped with a PI (polyimide) film (in Fig. 10, a rectangle which is shown by a dotted line and which encloses the laminated prepreg and the NITOFLON sheets). This wrapped laminated prepreg was placed as shown in Fig. 10. With use of a press molding machine, (1) the wrapped laminated prepreg was heated at 30°C for 30 minutes, 50°C for 30 minutes, 70°C for 30 minutes, 80°C for 2 hours, and 120°C for 1 hour under a vacuum condition, (2) the wrapped laminated prepreg was pressed at 2 MPa under a vacuum condition, a temperature thereof was increased to 150°C, and the wrapped laminated prepreg was heated for 1 hour, (3) thereafter, after the temperature was decreased to 100°C, subsidiary materials were removed, and the laminated prepreg was pressed at 2 MPa and heated at 190°C for 2 hours and 220°C for 1 hour so as to be cured. In this manner, a plate-like CFRP having a thickness of approximately 3 mm was obtained. Materials used are shown below.
Stainless steel plate: 2 mm thickness
Glass fibers: manufactured Airtech, product name: BleederLeaseE
Bagging film: manufactured by Airtech, product name: Strechlon800 (SL800)
Breather Cloth: manufactured by Takayasu Co., Ltd., product name: ARAFNON OSE-135
Sealant Tape: manufactured by Airtech, AT-200Y
Base plate: 3 mm thickness
NITOFLON sheet: manufactured by Nitto Denko Corporation, product name: 9700UL
PI film: 50 micron thickness

### <Observation of cross section of CFRP>

### [Example 15]

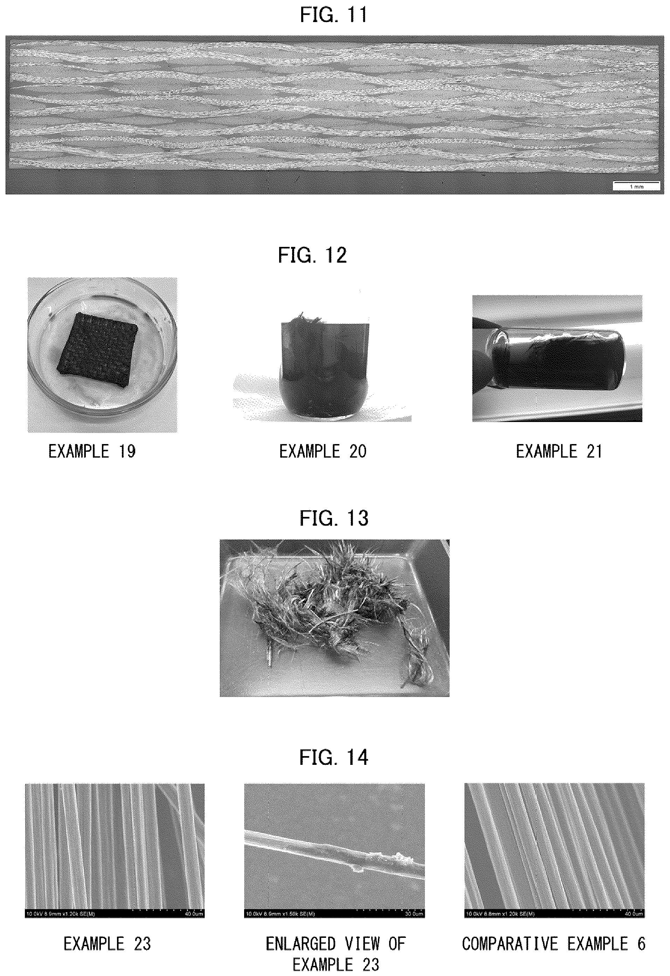

A central part of the plate-like CFRP obtained in Example 14 was cut out with use of a diamond cutter, and embedded in an epoxy resin. Next, a cross section which contained the CFRP was exposed with use of a diamond cutter, and polished with use of a polishing device (MINITECH 223, manufactured by Presi). Thereafter, the cross section was observed with use of a metal microscope (AX70-53-MBS, manufactured by Olympus Corporation) and a digital camera for a microscope (DP21, manufactured by Olympus Corporation) so that whether a void was present inside the CFRP was evaluated. Fig. 11 and Table 3 show a result.

### <Glass transition temperature of CFRP>

### [Example 16]

A central part of the plate-like CFRP obtained in Example 14 was cut out with use of a diamond cutter, and the glass transition temperature Tg of the CFRP was determined with use of a dynamic viscoelasticity measurement device (DMA, Q800, manufactured by TA Instruments, bending mode, single cantilever). Measurement was carried out at a frequency (1 Hz) and a temperature increase rate of 5°C /min. An extrapolated glass transition onset temperature (an intersection of a straight line obtained by extending, to a higher temperature region by extrapolation, a baseline before an inflection point and a tangent line at the inflection point) determined from an obtained DMA curve was regarded as the Tg in the present Example. Table 3 shows a result.

### [Example 17]

The plate-like CFRP obtained in Example 14 was postcured at 250°C for 30 minutes in an oven. A DMA test similar to that in Example 16 was carried out with respect to the postcured plate-like CFRP. Table 3 shows a result.

### <Interlaminar shear strength of CFRP>

### [Example 18]

A central part of the plate-like CFRP obtained in Example 14 was cut out with use of a diamond cutter, a short beam shear (SBS) test was carried out with use of a universal test machine (AG-10TB, manufactured by SHIMADSU). The size of the test piece and the conditions of the test were set in conformity with ASTMD2344, and the interlaminar shear strength of the CFRP was determined by the following formula. Table 3 shows a result. The interlaminar shear strength [MPa] = 3 × an interlaminar shear load [N] / (4 × test piece width [mm] × test piece thickness [mm])

### <Amine decomposability of CFRP>

### [Example 19]

A 3 cm square test piece was cut out from the plate-like CFRP obtained in Example 14 with use of a diamond cutter. The test piece (resin amount: 2.0628 g), hexamethylenediamine (2.0628 g), and 30 mL of DMF were added, and reacted at 100°C for 24 hours. Table 4 and Fig. 12 show a result.
Criteria of evaluation of decomposability:
A: The cured resin component was completely dissolved, and the carbon fibers were loosened.
B: The cured resin component was partially dissolved, and the solution was colored. However, the shape of the carbon fibers was maintained.
C: The cured resin component was not dissolved at all, and also coloring of the solution was not observed.

### [Example 20]

A 4 cm square test piece was cut out from the plate-like CFRP obtained in Example 14 with use of a diamond cutter. The test piece (resin amount: 2.0628 g), hexamethylenediamine (34.4076 g), and 250 mL of DMF were added, and reacted at 100°C for 30 hours. Table 4 and Fig. 12 show a result.

### [Example 21]

A 3 cm × 0.3 cm test piece was cut out from the plate-like CFRP obtained in Example 14 with use of a diamond cutter. The test piece (resin amount: 0.2479 g), hexamethylenediamine (2.4790 g), and 15 mL of DMF were added, and reacted at 100°C for 13 hours. Table 4 and Fig. 12 show a result.

### <Recovery of recycled carbon fibers (r-CF)>

### [Example 22]

A decomposition resin solution obtained in Example 21 was subjected to filtration so that the carbon fibers were recovered. Thereafter, the carbon fibers were washed in acetone for 3 hours, and then filtration was carried out. This was repeated three times. The carbon fibers were dried at 100°C for 6 hours in a vacuum oven. The obtained carbon fibers were regarded as r-CF. Fig. 13 shows a result.

### <SEM observation of recycled carbon fibers (r-CF)>

### [Example 23]

The r-CF obtained in Example 22 was observed with use of an SEM. Fig. 14 shows a result.

### [Comparative Example 6]

The carbon fibers constituting the prepreg and the CFRP shown in Examples 14 and 15 are PAN-based carbon fibers which were manufactured by Toray Industries, Inc. and from which the sizing agent was removed. Such carbon fibers are regarded as virgin CF (v-CF) in contrast to the r-CF in Example 22. The v-CF was observed with use of an SEM. Fig. 14 shows a result.

### <TGA measurement of recycled carbon fibers (r-CF)>

### [Example 24]

TGA measurement was carried out with respect to the r-CF obtained in Example 22, and the percentage of the amount of the resin which remained was calculated.

In Example 15, it was confirmed that no void was present inside the CFRP obtained in Example 14, as shown in Fig. 11. Thereafter, evaluations were carried out on the premise that there was no void. Subsequently, in Examples 16 and 17, DMA measurement was carried out and a glass transition temperature was calculated so that heat resistance was evaluated. As a result, a system which was prepared in Example 13 and which had a final curing temperature of 220°C exhibited a Tg of 221°C, and a system which was postcured at 250°C exhibited a Tg of 238°C (Table 3). In Example 18, an SBS test was carried out and interlaminar shear strength between the resin and the carbon fibers was calculated so that mechanical properties were evaluated. As a result, it was found that interlaminar shear strength of 45 MPa was exhibited (Table 3).

From Table 4 and Fig. 12, in Example 19, Example 11 (amine decomposition condition for the cured film) was reproduced and a decomposition test was carried out, so that a small amount of the CFRP was decomposed after elapse of 24 hours. In Examples 20 and 21, in each of which the amine was added in an increased amount, a state in which the cured resin in the CFRP was decomposed and separated from the carbon fibers was confirmed. In Example 20, the 4 cm square test piece was used, and a time required for decomposition was 30 hours. In Example 21, the 3 cm × 0.3 cm test piece was used, and a time required for decomposition was 13 hours.

As shown in Fig. 14, a state of surfaces of the r-CF was observed in Example 23 and a state of surfaces of the v-CF was observed in Comparative Example 6, with use of an SEM. As a result of comparing Example 23 (left in Fig. 14) and Comparative Example 6 (right in Fig. 14), it was found that the states of the surfaces of the carbon fibers were comparable. However, as shown in the middle (enlarged view of Example 23) of Fig. 14, the resin which remained on the surfaces of the carbon fibers was observed in a part of the r-CF. In Example 24, TGA measurement was carried out so that the amount of this remaining resin was quantified. As a result, a weight decrease of 1% to 1.5% was observed.

**[Table 3]**

| | Analysis | Evaluation Item | Evaluation Result |
|---|---|---|---|
| Example 15 | Observation of cross section | Whether a void is present | None |
| Example 16 | DMA Measurement | Tg (°C) | 221 |
| Example 17 | | | 238 |
| Example 18 | SBS Test | Interlaminer shear strength (MPa) | 45 |

**[Table 4]**

| | Conditions | | | | | | | Decomposability |
|---|---|---|---|---|---|---|---|---|
| | Test Piece Size | Type of Amine | Added Amount (Weight Ratio) | | Solvent | Temperature (°C) | Time (h) | |
| | | | Amine | Resin | | | | |
| Example 19 | 3cm × 3cm | I HexamethylenediamineI | 1 | 1 | DMF | 100 | 24 | B |
| Example 20 | 4cm × 4cm | | 10 | 1 | DMF | 100 | 30 | A |
| Example 21 | 3 3 cm × 0.3 cm | | 10 | 1 | DMF | 100 | 13 | A |

### (Conclusion)

From Examples 15 to 18, it was found that the CFRP in accordance with an embodiment of the present invention, in which the cured product of the benzoxazine compound containing the dynamic covalent bond was used as a matrix resin, exhibited excellent heat resistance (high glass transition temperature) and had interlaminar shear strength of 45 MPa, similarly to the cured resin film.

From Examples 19 to 21, when the amine decomposability of the CFRP was evaluated, the solution was colored and a deformation of an end part of the CFRP was confirmed in Example 19, and, therefore, it was determined that a part of the resin cured product was decomposed. In Examples 20 and 21, it could be confirmed that the resin cured product component of the CFRP was completely decomposed, and the carbon fibers were loosened. It was also found that, although even a large test piece could be decomposed, a smaller test piece took a shorter time to be decomposed.

From Examples 23 and 24, when the r-CF recovered in the amine decomposition test was evaluated, it was found that most of the resin could be removed and the state of the surfaces of the r-CF was comparable to the state of the surfaces of the v-CF. Although it was confirmed that a part of the resin remained, it was found that such a remaining resin was not more than 1.5%.

Thus, regarding the CFRP in accordance with an embodiment of the present invention, in which the cured product of the benzoxazine compound containing the dynamic covalent bond is used as a matrix resin, it is possible to recycle the carbon fibers by decomposing the cured resin component with use of the amine.

### [Evaluation result 5: evaluation of prepreg laminate]

An example of a prepreg in which the present invention was used is described below.

### <Measurement of degree of cure of cured film>

The degree of cure of a cured film was determined as follows. First, DSC curves were measured with use of a differential scanning calorimeter (DSC, DSC7000X manufactured by Hitachi High-Tech Science Corporation) at 5°C/min and a nitrogen flow rate of 40 mL/min. Next, the degree of cure was calculated from the amounts of heat generated before and after curing derived from ring opening of benzoxazine, with use of the following formula. The degree of cure [%] = 100-{(the amount of the heat generated after the curing)/(the amount of the heat generated before the curing) × 100}

Note, here, that the amount of the heat generated before the curing indicates the area of an exothermic peak in the DSC curve of an uncured resin, and the amount of the heat generated after the curing indicates the area of an exothermic peak in the DSC curve of the cured film.

### <Repetitive deformability test of prepreg laminate>

### [Example 25]

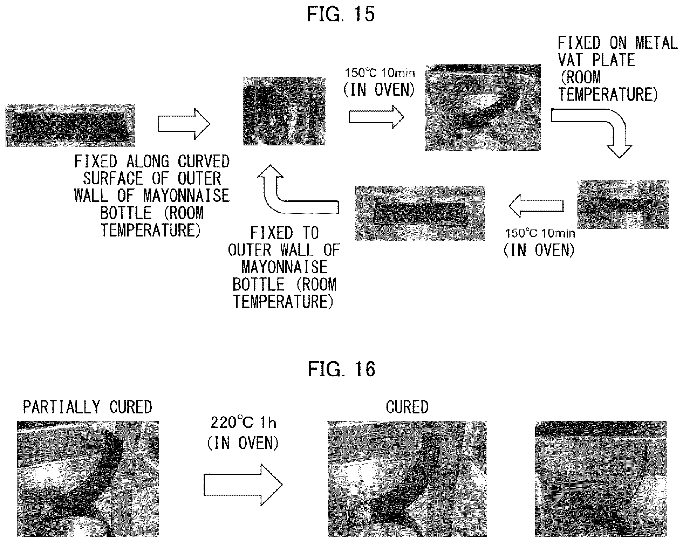

Three prepregs obtained in Example 13 were stacked, and heated at 150°C for 1 hour in a convection oven. The repetitive deformability (thermal shapability) of this prepreg laminate was evaluated by a method as shown in Fig. 15. The number of cycles of repetitions of a state A (a state in which the prepreg laminate was bent along a side surface of a glass round bottle) and a state B (a state in which the bent prepreg laminate was fixed to the bottom surface of a metal vat and stretched) was evaluated. When the laminate was processed from the state A to the state B, the laminate was manually stretched at room temperature, fixed to the bottom surface of the vat, and heated in this state at 150°C for 10 minutes so as to be cured. When the laminate was processed from the state B to the state A, the laminate was manually bent at room temperature along the side surface of the round bottle, and heated in this state at 150°C for 10 minutes so as to be cured. A series of processes of processing the prepreg laminate from the state A to the state B as described above and then processing the prepreg laminate from the state B to the state A was regarded as one cycle (a thermal history of 150°C for 20 minutes was made in one cycle). It was determined that the prepreg laminate lost repetitive deformability, at break of the prepreg laminate. The degree of cure of the resin in each cycle was calculated from a cured film in which a thermal history made with respect to the prepreg laminate was reproduced. Table 5 shows a result.

### [Comparative Example 7]

As a generally used CFRP, three commercially available epoxy prepregs which cured at 180°C were stacked, and heated at 150°C for 1 hour in a convection oven. Regarding this prepreg laminate, an evaluation of repetitive deformability was carried out as in Example 24. Table 5 shows a result.

In Example 25, until the fourth cycle, the prepreg laminate could be deformed repeatedly, as shown in Fig. 15. Thereafter, when the prepreg laminate was bent in the fifth cycle, break of the prepreg laminate was observed, and it was determined that the prepreg laminate lost repetitive deformability. From Table 5, total thermal histories made by the fourth cycle was 150°C for 2 hours and 20 minutes, and the degree of cure of the resin at this time was 35.6%. In contrast, in Comparative Example 7, in which the epoxy prepreg was used, break of the prepreg laminate was observed in the first cycle, and it was determined that the prepreg laminate lost repetitive deformability. A thermal history was 150°C for 1 hour.

### <Free-standing property test of prepreg laminate>

### [Example 26]

Two prepregs obtained in Example 13 were stacked. In a state in which the prepregs were bent along a side surface of a glass round bottle and attached to the side surface of the glass bottle, the prepregs were heated at 150°C for 1 hour and at 180°C for 1 hour in a convection oven so as to be partially cured. This prepreg laminate was detached from the side surface of the glass bottle. In a state in which one end of the bent laminate was fixed to the bottom surface of a metal vat and the other end was caused to float in the air, the laminate was heated at 220°C for 1 hour in an oven to observe a free-standing property (self-supporting property). Fig. 16 shows a result. The degree of cure of the resin before and after the evaluation was calculated from a cured film in which thermal histories made with respect to the prepreg laminate were reproduced. Table 6 shows a result.

From Fig. 16, in Example 26, it could be confirmed that the test piece which was partially cured to a degree of cure of 78.5% maintained a bent shape even after the test piece was heated at 220°C in an oven, that is, a state in which one end of the bent laminate was fixed to the bottom surface of the metal vat and the other end was caused to float in the air was maintained.

**[Table 5]**

| | | Remoldability | Corresponding Thermal History | Degree of Cure (%) |
|---|---|---|---|---|
| Example 25 | At molding | - | 150°C, 1 h | 0 |
| | First cycle | Exhibited | 150°C, 1 h 20 min | 0 |
| | Second cycle | Exhibited | 150°C, 1 h 40 min | 2.5 |
| | Third cycle | Exhibited | 150°C, 2 h | 1.9 |
| | Fourth cycle | Exhibited (limit) | 150°C, 2 h 20 min | 35.6 |
| | Fifth cycle | Not exhibited | 150°C, 2 h 40 min | - |
| Comparative Example 7 | First cycle | Not exhibited | 150°C, 1 h | - |

**[Table 6]**

| | | Corresponding Thermal History | Degree of Cure (%) |
|---|---|---|---|
| Example 26 | Before test | 150°C, 1 h + 180°C, 1 h | 78.5 |
| | After test | 150°C, 1 h + 180°C, 1 h + 220°C, 1 h | 100 |

### (Conclusion)

From the result in Example 25, it was suggested that repetitive deformations by heating were possible in a case where the degree of cure of the resin was not more than 35.6%. That repetitive deformations are possible means, for example, that, after prepregs are stacked once, the prepregs can be deformed into a different shape. In contrast, in Comparative Example 7, since curing progresses by a thermal history of 150°C for 1 hour made for molding, repetitive deformations by heating are not possible.

From the result in Example 26, it was suggested that a free-standing property was exhibited in a case where the degree of cure of the resin was at least not less than 78.5%. These properties are useful in stacking and molding prepreg laminates as a CFRP.

Furthermore, in a case where a free-standing property is not exhibited, curing is carried out in an autoclave to a final curing temperature. Therefore, it is not possible to use a general-purpose subsidiary material (heat resistance is approximately 180°C in accordance with an epoxy), and a subsidiary material of high heat resistance should be used. However, in a case where, as in the present Examples, a free-standing property is exhibited under a curing condition of not higher than 180°C, it is possible to switch from molding in the autoclave to molding in an oven in the middle of molding of a composite material, and no use of an expensive side material is required.

Thus, it is considered that the prepreg/CFRP in accordance with an embodiment of the present invention, in each of which the cured product of the benzoxazine compound containing the dynamic covalent bond is used as a matrix resin, has excellent moldability, in addition to decomposability.

### Industrial Applicability

An aspect of the present invention can be used in the fields in which thermosetting resins are used.

## Claims

1. A thermosetting resin which has, in a main chain, a benzoxazine ring structure represented by general formula (I): 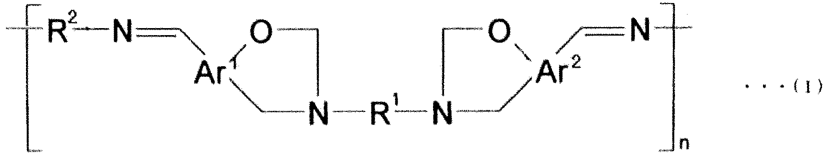 [wherein:
Ar¹ and Ar² each represent a trivalent aromatic group derived from a phenol compound (A);
Ar¹ and Ar² may be identical to or different from each other;
R¹ represents a divalent aromatic group which is derived from an aromatic diamine compound (B1) and which is represented by one or more of general formulas (II) to (V);
R² represents a divalent aromatic group derived from an aromatic diamine compound (B2);
R¹ and R² may be identical to or different from each other; and
n represents 1 or more]: 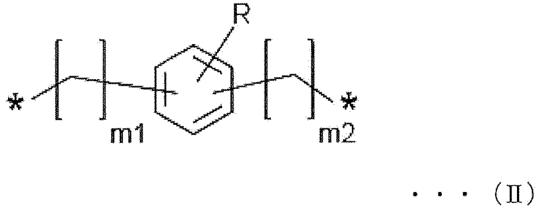 [wherein:
asterisks each represent a bonding site;
bonds to an aromatic ring which bonds form the main chain, except a bond between R and the aromatic ring, are in meta- or para- position;
the R is a substituent on the aromatic ring and represents an aliphatic group having 1 to 10 carbon atoms, the number of Rs is 0 or 1 or more, and, in a case where the number of Rs is 2 or more, Rs may be identical to or different from each other; and
m1 and m2 each represent 0 or 1]; 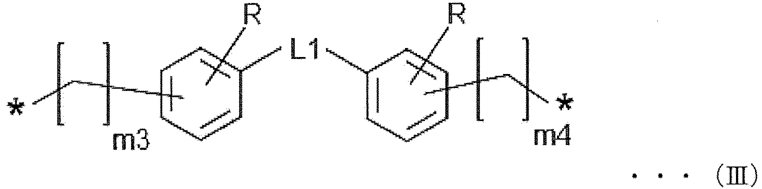 [wherein:
asterisks each represent a bonding site;
bonds to each of two aromatic rings which bonds form the main chain, except bonds between Rs and the two aromatic rings, are in meta- or para- position;
L1 represents one or more of a single bond, an isopropylidene group, a sulfonyl group, a carbonyl group, and a 9,9-fluorenyl group;
the Rs are substituents on the two aromatic rings and each represent an aliphatic group having 1 to 10 carbon atoms, the number of Rs on each of the two aromatic rings is 0 or 1 or more, and, in a case where the number of Rs is 2 or more, the Rs may be identical to or different from each other; and
m3 and m4 each represent 0 or 1]; 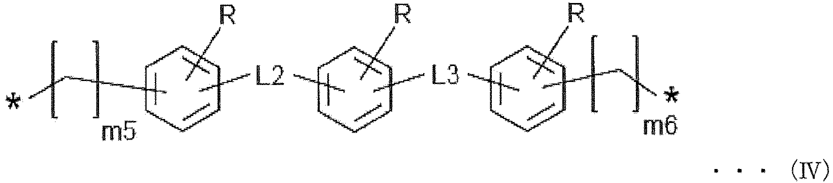 [wherein:
asterisks each represent a bonding site;
bonds to each of three aromatic rings which bonds form the main chain, except bonds between Rs and the three aromatic rings, are in meta- or para- position;
L2 and L3 each represent an oxy group;
the Rs are substituents on the three aromatic rings and each represent an aliphatic group having 1 to 10 carbon atoms, the number of Rs on each of the three aromatic rings is 0 or 1 or more, and, in a case where the number of Rs is 2 or more, the Rs may be identical to or different from each other; and
m5 and m6 each represent 0 or 1]; and 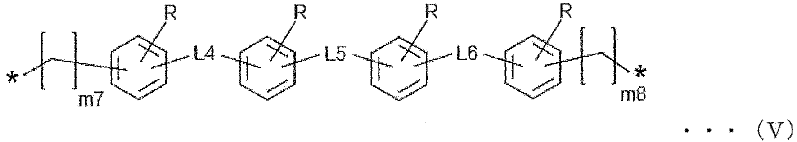 [wherein:
asterisks each represent a bonding site;
bonds to each of four aromatic rings which bonds form the main chain, except bonds between Rs and the four aromatic rings, are in meta- or para- position;
L4 and L6 each represent an oxy group;
L5 represents one or more of a single bond, an isopropylidene group, a sulfonyl group, a carbonyl group, and a 9,9-fluorenyl group;
the Rs are substituents on the four aromatic rings and each represent an aliphatic group having 1 to 10 carbon atoms, the number of Rs on each of the four aromatic rings is 0 or 1 or more, and, in a case where the number of Rs is 2 or more, the Rs may be identical to or different from each other; and
m7 and m8 each represent 0 or 1].

2. The thermosetting resin as set forth in claim 1, wherein the aromatic diamine compound (B1) is at least one selected from the group consisting of 1,4-diaminobenzene, 1,3-diaminobenzene, 2,4-diaminotoluene, 2,6-diaminotoluene, 3-(aminomethyl)benzylamine, 4-(aminomethyl)benzylamine, 3,3'-sulfonyldianiline, 4,4'-sulfonyldianiline, 3,3'-diaminobenzophenone, 4,4'-diaminobenzophenone, 1,3-bis(4-aminophenoxy) benzene, 1,3-bis(3-aminophenoxy)benzene, 2,2-bis[4-(4-aminophenoxy)phenyl]propane, bis[4-(4-aminophenoxy)phenyl]sulfone, 4,4'-bis(3-aminophenoxy) biphenyl, 4,4'-bis(4-aminophenoxy)biphenyl, and 9,9-bis(4-aminophenyl)fluorene.

3. A composition comprising a thermosetting resin recited in claim 1.

4. An uncured molded product obtained by molding a thermosetting resin recited in claim 1.

5. A cured molded product obtained by curing a thermosetting resin recited in claim 1, a composition recited in claim 3, or an uncured molded product recited in claim 4.

6. A decomposition product which is obtained by decomposing a cured molded product recited in claim 5 under an acidic or basic condition and which is soluble in a solvent.

7. A method for producing a decomposition product which is soluble in a solvent, comprising the step of
decomposing a cured molded product recited in claim 5 under an acidic or basic condition.

8. A thermosetting resin which has a benzoxazine ring structure in a main chain, wherein
an uncured molded product which is obtained by molding the thermosetting resin has remoldability and toughness,
the remoldability refers to a property in which, after the uncured molded product is divided into a plurality of pieces, the plurality of pieces are capable of being integrated by heating at not higher than 200°C,
the toughness refers to a property in which a break or a crack does not occur in the uncured molded product before and after the heating, and
the remoldability and the toughness are maintained even in a case where division and integration and the heating are repeated once or more.

9. A method for producing a thermosetting resin which has a benzoxazine ring structure in a main chain, comprising:
a step (s1) of reacting a phenol compound (A), an aromatic diamine compound (B1), and an aldehyde compound (C); and
a step (s2) of further reacting an aromatic diamine compound (B2),
the method comprising the steps (s1) and (s2) in this order,
the phenol compound (A) having an aldehyde group, and
the aromatic diamine compound (B1) being represented by one or more of general formulas (IIa) to (Va): 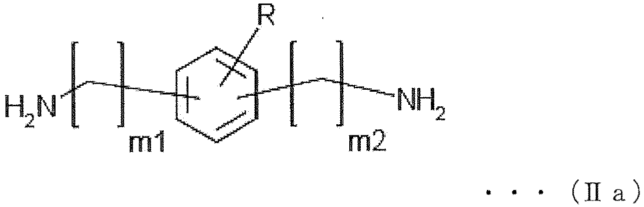 [wherein:
bonds to an aromatic ring which bonds form the main chain, except a bond between R and the aromatic ring, are in meta- or para- position;
the R is a substituent on the aromatic ring and represents an aliphatic group having 1 to 10 carbon atoms, the number of Rs is 0 or 1 or more, and, in a case where the number of Rs is 2 or more, Rs may be identical to or different from each other; and
m1 and m2 each represent 0 or 1]; 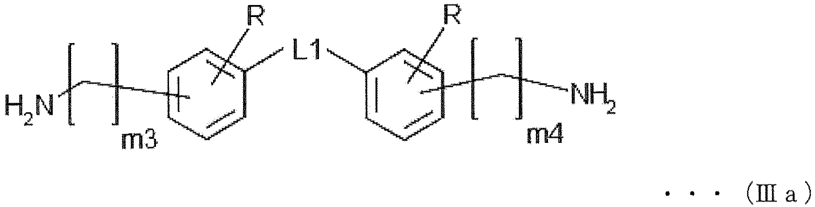 [wherein:
bonds to each of two aromatic rings which bonds form the main chain, except bonds between Rs and the two aromatic rings, are in meta- or para- position;
L1 represents one or more of a single bond, an isopropylidene group, a sulfonyl group, a carbonyl group, and a 9,9-fluorenyl group;
the Rs are substituents on the two aromatic rings and each represent an aliphatic group having 1 to 10 carbon atoms, the number of Rs on each of the two aromatic rings is 0 or 1 or more, and, in a case where the number of Rs is 2 or more, the Rs may be identical to or different from each other; and
m3 and m4 each represent 0 or 1]; 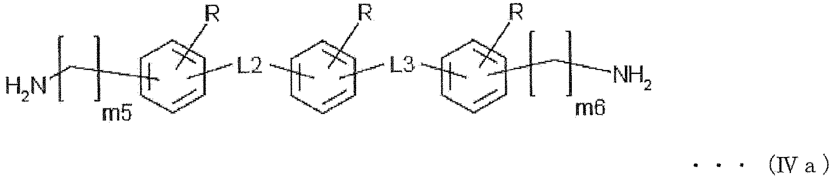 [wherein:
bonds to each of three aromatic rings which bonds form the main chain, except bonds between Rs and the three aromatic rings, are in meta- or para- position;
L2 and L3 each represent an oxy group;
the Rs are substituents on the three aromatic rings and each represent an aliphatic group having 1 to 10 carbon atoms, the number of Rs on each of the three aromatic rings is 0 or 1 or more, and, in a case where the number of Rs is 2 or more, the Rs may be identical to or different from each other; and
m5 and m6 each represent 0 or 1]; and 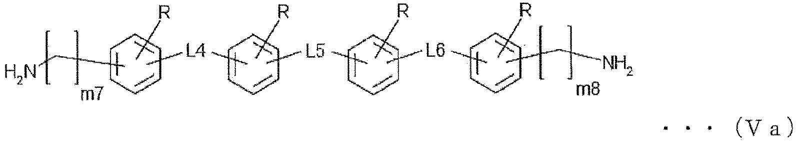 [wherein:
bonds to each of four aromatic rings which bonds form the main chain, except bonds between Rs and the four aromatic rings, are in meta- or para- position;
L4 and L6 each represent an oxy group;
L5 represents one or more of a single bond, an isopropylidene group, a sulfonyl group, a carbonyl group, and a 9,9-fluorenyl group;
the Rs are substituents on the four aromatic rings and each represent an aliphatic group having 1 to 10 carbon atoms, the number of Rs on each of the four aromatic rings is 0 or 1 or more, and, in a case where the number of Rs is 2 or more, the Rs may be identical to or different from each other; and
m7 and m8 each represent 0 or 1].

10. A prepreg or a semipreg each of which is obtained by impregnating reinforcement fibers with a thermosetting resin recited in claim 1 or 2 or a composition recited in claim 3.

11. The prepreg or the semipreg as set forth in claim 10, wherein the prepreg or the semipreg has a property in which the prepreg or the semipreg is capable of being repeatedly deformed and/or a property in which the prepreg or the semipreg is capable of being cured in a free-standing state.

12. A fiber composite material obtained by impregnating reinforcement fibers with a thermosetting resin recited in claim 1 or 2 or a composition recited in claim 3 and curing the thermosetting resin or the composition.

13. A method for molding a fiber composite material, comprising the steps of:
obtaining a prepreg or a semipreg by impregnating reinforcement fibers with a thermosetting resin recited in claim 1 or 2 or a composition recited in claim 3;
obtaining a preliminarily cured prepreg having a degree of cure of more than 0% to 99%, by preliminarily curing the prepreg or the semipreg; and
obtaining the fiber composite material by curing the preliminarily cured prepreg.

14. The method as set forth in claim 13, further comprising the step of
deforming the prepreg or the semipreg before preliminarily curing the prepreg or the semipreg.

15. The method as set forth in claim 13, further comprising the step of
obtaining the preliminarily cured prepreg in a free-standing shape by deforming the preliminarily cured prepreg, before curing the preliminarily cured prepreg.
